# EUROPEAN PATENT APPLICATION

(11) **EP 3 407 635 A1**
(43) Date of publication of application: **28.11.2018**
(21) Application number: 16890975.2
(22) Date of filing: 23.02.2016
(51) Int. Cl.: H04W 12/06, H04L 29/06

(54) **SECURE COMMUNICATION METHOD AND CORE NETWORK NODE**

(71) Applicant: Huawei Technologies Co., Ltd., Longgang District Shenzhen, Guangdong 518129 (CN)
(72) Inventor: YING, Jiangwei, Shenzhen Guangdong 518129 (CN)
(74) Representative: Pfenning, Meinig & Partner mbB
(86) International application number: PCT/CN2016/074365
(87) International publication number: WO 2017/143521

(57) **Abstract**

A secure communication method and a core network node are provided. In the method, a first core network node in a home public land mobile network HPLMN receives a first data authentication request sent by a core network node in a visited public land mobile network VPLMN, and sends a second data authentication request to a home location register HLR or a home subscriber server HSS; the HLR or the HSS generates an end-to-end security key; the first core network node in the HPLMN sends the end-to-end security key to a second core network node in the HPLMN; and the second core network node in the HPLMN performs, based on the end-to-end security key, secure communication with a terminal that has roamed to the VPLMN. This can ensure that a key used in the HPLMN network is not obtained by the VPLMN network.

## Description

### TECHNICAL FIELD

The present invention relates to the field of communications technologies, and in particular, to a secure communication method and a core network node.

### BACKGROUND

Information of a mobile communications system is transmitted on a radio channel, and is prone to be intercepted and tampered with by an attacker. However, information of a communications system is usually private. To ensure secure transmission of user data, security of communication data needs to be protected.

For example, in Cellular (Cellular) Internet of Things (Internet of Things, IoT) communication, Cellular IoT data relates to a large volume of high-sensitivity and important data with a high privacy requirement and a high security level requirement. Security of the data needs to be protected, and the data further needs to be prevented from being decrypted by a visited public land mobile network (Visited Public Land Mobile Network, VPLMN). A security mechanism mainly relates to three aspects: authentication, key agreement, and algorithm agreement. In an existing mobile communications system, an Authentication and Key Agreement (Authentication and Key Agreement, AKA) mechanism is used to implement authentication and key agreement. In addition, algorithm agreement between user equipment (User Equipment, UE) and an evolved NodeB (evolved NodeB, eNB or eNodeB for short) is performed by using access stratum security mode command (Access Stratum Security Mode Command, AS SMC), and algorithm agreement between the UE and a mobility management entity (Mobility Management Entity, MME) is performed by using non-access stratum security mode command (No Access Stratum Security Mode Command, NAS SMC). Likewise, to ensure Cellular IoT communication security, corresponding authentication, key agreement, and algorithm agreement between the UE and a home public land mobile network (Home Public Land Mobile Network, HPLMN) also needs to be implemented.

In addition, in the mobile communications system, terminal communication scenarios include a non-roaming scenario and a roaming scenario. In the non-roaming scenario, security authentication on a user may be completed in a home public land mobile network (Home Public Land Mobile Network, HPLMN), to perform secure communication. In the roaming scenario, security authentication on a roaming user needs to be completed in a visited public land mobile network (Visited Public Land Mobile Network, VPLMN), to perform secure communication. If security authentication is performed in the VPLMN network, the VPLMN network needs to obtain a key from the HPLMN network, for example, obtain the key from a home location register (Home Location Register, HLR) or a home subscriber server (Home Subscriber Server, HSS), and then security authentication is performed. However, it may be improper to let the VPLMN network know some relatively sensitive and private communication data of the roaming user. If the foregoing process of performing security authentication on and key agreement with the roaming user is used, the communication data may be leaked in the VPLMN.

Therefore, it is imperative to provide a new security agreement mechanism for the roaming user, to prevent the VPLMN network from obtaining a communication key used in the HPLMN network, thereby improving communication security.

### SUMMARY

Embodiments of the present invention provide a secure communication method and a core network node, to prevent a VPLMN network from obtaining a communication key used in an HPLMN network, thereby improving communication security.

According to a first aspect, a secure communication method is provided. A core network node in a visited public land mobile network VPLMN sends a first data authentication request to a first core network node in a home public land mobile network HPLMN, where the first data authentication request includes a terminal identifier of a terminal that has roamed to the VPLMN;
the first core network node in the home public land mobile network HPLMN receives the first data authentication request sent by the core network node in the visited public land mobile network VPLMN, and sends a second data authentication request to a home location register HLR or a home subscriber server HSS, where the second data authentication request includes the terminal identifier that is included in the first data authentication request and that is of the terminal that has roamed to the VPLMN;
the HLR or the HSS generates an authorization vector used by the core network node in VPLMN to perform security authentication on the terminal, and an end-to-end security key used to protect secure communication between the terminal and a second core network node in the HPLMN; and the HLR or the HSS sends a second data authentication response to the first core network node in the HPLMN, where the second data authentication response includes the authorization vector and the end-to-end security key;
the first core network node in the HPLMN receives the second data authentication response sent by the HLR or the HSS, returns a first data authentication response to the core network node in the VPLMN, and sends an end-to-end notification to the second core network node in the HPLMN, where the first data authentication response includes the authorization vector, and the end-to-end key notification includes the terminal identifier and the end-to-end security key; and
the second core network node in the HPLMN receives the end-to-end key notification sent by the first core network node in the HPLMN, obtains the end-to-end security key through parsing, and selects an end-to-end security algorithm from a terminal-supported security algorithm, to complete key agreement and algorithm agreement between the terminal and the second core network node in the HPLMN; and the second core network node in the HPLMN performs, based on the end-to-end security key and the selected end-to-end security algorithm, secure communication with the terminal corresponding to the terminal identifier. This can prevent a security key in the HPLMN from being obtained by the VPLMN, thereby protecting end-to-end security between UE and the HPLMN network. In addition, in this embodiment of the present invention, the HLR/HSS does not need to directly interact with the second core network node in the HPLMN. Therefore, an interface between the second core network node in the HPLMN and the HLR/HSS can be prevented from being enabled.

In a possible design, the core network node in the VPLMN may send the first data authentication request to the first core network node in the HPLMN when determining that communication data of the terminal in the VPLMN needs to be routed to a core network node in the HPLMN.

Optionally, the core network node in the VPLMN determines, based on the terminal identifier sent by the terminal, that the communication data of the terminal in the VPLMN needs to be routed to the core network node in the HPLMN, where the terminal identifier can indicate that the communication data of the terminal needs to be routed to the core network node in the HPLMN; or the core network node in the VPLMN determines, based on indication information sent by the terminal, that the communication data of the terminal in the VPLMN needs to be routed to the core network node in the HPLMN, where the indication information is used to indicate that the communication data of the terminal needs to be routed to the core network node in the HPLMN.

In another possible design, the core network node in the VPLMN may select the second core network node in the HPLMN for the terminal, and add an address of the selected second core network node in the HPLMN to the first data authentication request, to send the address of the selected second core network node in the HPLMN to the first core network node in the HPLMN; and the first core network node in the HPLMN sends, based on the address of the second core network node, the end-to-end key notification to the second core network node that is in the HPLMN and that is indicated by the address.

The foregoing secure communication method is applicable to a general packet radio service (General Packet Radio Service, GPRS) system. The core network node in the VPLMN may be a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

The foregoing secure communication method is also applicable to a system architecture evolution (System Architecture Evolution, SAE) system. The core network node in the VPLMN may be a mobility management entity MME in the VPLMN, the first core network node in the HPLMN is an MME in the HPLMN, and the second core network node in the HPLMN is a packet data network gateway in the HPLMN.

The foregoing secure communication method is applied to different communication scenarios, and different algorithm agreement processes may be used between the second core network node in the HPLMN and the terminal that has roamed to the VPLMN.

In a possible design, the foregoing secure communication method is applicable to a GPRS communication scenario and an SAE scenario, and algorithm agreement may be performed in a key agreement process. A specific process is as follows:
The core network node in the VPLMN sends the terminal-supported security algorithm to the first core network node in the HPLMN; the first core network node in the HPLMN sends the terminal-supported security algorithm to the second core network node in the HPLMN; and the second core network node in the HPLMN selects the required end-to-end security algorithm from the terminal-supported security algorithm, and sends the selected end-to-end security algorithm to the terminal, to complete algorithm agreement.

Specifically, the core network node in the VPLMN may add the terminal-supported security algorithm to the first data authentication request sent to the first core network node in the HPLMN. The terminal-supported security algorithm may be reported to the core network node in the VPLMN by using a terminal-supported network capability.

The first core network node in the HPLMN may add the terminal-supported security algorithm to the end-to-end key notification sent to the second core network node in the HPLMN.

Optionally, the second core network node in the HPLMN may perform integrity protection on the terminal-supported security algorithm and the selected end-to-end security algorithm based on an integrity protection algorithm and an integrity key, to generate a message verification value; and send the message verification value, the terminal-supported security algorithm, and the selected end-to-end security algorithm to the terminal corresponding to the terminal identifier.

Specifically, the second core network node in the HPLMN may add the message verification value, the terminal-supported security algorithm, and the selected end-to-end security algorithm to an end-to-end key notification reply message that is sent to the first core network node in the HPLMN. The first core network node in the HPLMN adds the message verification value, the terminal-supported security algorithm, and the selected end-to-end security algorithm to the first data authentication response sent to the core network node in the VPLMN. The core network node in the VPLMN receives the first data authentication response, and sends the message verification value, the terminal-supported security algorithm, and the selected end-to-end security algorithm to the terminal corresponding to the terminal identifier, to complete algorithm agreement between the second core network node in the HPLMN and the terminal.

In another possible design, for a GPRS communication scenario, algorithm agreement between the second core network node in the HPLMN and the terminal may be performed by using a PDP context activation procedure, to obtain the end-to-end security algorithm. An implementation process is as follows:
The core network node in the VPLMN sends a create PDP context request message to the second core network node in the HPLMN, where the create PDP context request message includes the terminal-supported security algorithm; and the second core network node in the HPLMN obtains the create PDP context request message sent by the core network node in the VPLMN, determines the terminal-supported security algorithm based on the create PDP context request message, and selects the end-to-end security algorithm from the terminal-supported security algorithm.

The second core network node in the HPLMN returns a create PDP context response message to the core network node in the VPLMN, where the create PDP context response message includes the end-to-end security algorithm selected by the second core network node in the HPLMN.

Optionally, in this embodiment of the present invention, the second core network node in the HPLMN may perform integrity protection on the terminal-supported security algorithm and the selected end-to-end security algorithm based on an integrity protection algorithm and an integrity key, to generate a message verification value; and send the message verification value, the terminal-supported security algorithm, and the selected end-to-end security algorithm to the terminal corresponding to the terminal identifier. To be specific, the create PDP context response message includes the verification value, the terminal-supported security algorithm, and the selected end-to-end security algorithm.

The core network node in the VPLMN receives the create PDP context response message returned by the second core network node in the HPLMN, and sends the end-to-end security algorithm that is included in the create PDP context response message and that is selected by the second core network node in the HPLMN to the terminal corresponding to the terminal identifier.

Optionally, if the second core network node in the HPLMN generates the message verification value, the message verification value, the terminal-supported security algorithm, and the selected end-to-end security algorithm are sent to the terminal corresponding to the terminal identifier.

In still another possible design, for an SAE communication scenario, algorithm agreement between the second core network node in the HPLMN and the terminal may be performed in a session establishment process, to obtain the end-to-end security algorithm. An implementation process is as follows:
The core network node in the VPLMN sends a session establishment request message to the second core network node in the HPLMN, where the session establishment request message includes the terminal-supported security algorithm; and the second core network node in the HPLMN obtains the session establishment request message sent by the core network node in the VPLMN, determines the terminal-supported security algorithm based on the session establishment request message, and selects the end-to-end security algorithm from the terminal-supported security algorithm.

The second core network node in the HPLMN returns a session establishment response message to the core network node in the VPLMN, where the session establishment response message includes the end-to-end security algorithm selected by the second core network node in the HPLMN.

Optionally, in this embodiment of the present invention, the second core network node in the HPLMN may perform integrity protection on the terminal-supported security algorithm and the selected end-to-end security algorithm based on an integrity protection algorithm and an integrity key, to generate a message verification value; and send the message verification value, the terminal-supported security algorithm, and the selected end-to-end security algorithm to the terminal corresponding to the terminal identifier. To be specific, the session establishment response message includes the verification value, the terminal-supported security algorithm, and the selected end-to-end security algorithm.

The core network node in the VPLMN receives the session establishment response message returned by the second core network node in the HPLMN, and sends the end-to-end security algorithm that is included in the session establishment response message and that is selected by the second core network node in the HPLMN to the terminal corresponding to the terminal identifier.

Optionally, if the second core network node in the HPLMN generates the message verification value, the message verification value, the terminal-supported security algorithm, and the selected end-to-end security algorithm are sent to the terminal corresponding to the terminal identifier.

In yet another possible design, for an SAE communication scenario, algorithm agreement between the second core network node in the HPLMN and the terminal may be performed in an independent algorithm agreement process, to obtain the end-to-end security algorithm. An implementation process is as follows:
The core network node in the VPLMN sends an algorithm agreement request message to the second core network node in the HPLMN, where the algorithm agreement request message includes the terminal-supported security algorithm; and the second core network node in the HPLMN obtains the algorithm agreement request message sent by the core network node in the VPLMN, determines the terminal-supported security algorithm based on the algorithm agreement request message, and selects the end-to-end security algorithm from the terminal-supported security algorithm.

The second core network node in the HPLMN returns an algorithm agreement response message to the core network node in the VPLMN, where the algorithm agreement response message includes the end-to-end security algorithm selected by the second core network node in the HPLMN.

Optionally, in this embodiment of the present invention, the second core network node in the HPLMN may perform integrity protection on the terminal-supported security algorithm and the selected end-to-end security algorithm based on an integrity protection algorithm and an integrity key, to generate a message verification value; and send the message verification value, the terminal-supported security algorithm, and the selected end-to-end security algorithm to the terminal corresponding to the terminal identifier. To be specific, the algorithm agreement response message includes the verification value, the terminal-supported security algorithm, and the selected end-to-end security algorithm.

The core network node in the VPLMN receives the algorithm agreement response message returned by the second core network node in the HPLMN, and sends the end-to-end security algorithm that is included in the algorithm agreement response message and that is selected by the second core network node in the HPLMN to the terminal corresponding to the terminal identifier.

Optionally, if the second core network node in the HPLMN generates the message verification value, the message verification value, the terminal-supported security algorithm, and the selected end-to-end security algorithm are sent to the terminal corresponding to the terminal identifier.

According to a second aspect, a core network node is provided, the core network node is applied to a VPLMN, and has a function of implementing the behavior of the core network node in the VPLMN in the foregoing method designs. The function may be implemented by hardware, or may be implemented by hardware by executing corresponding software. The hardware or the software includes one or more modules corresponding to the function.

In a possible design, a structure of the core network node in the VPLMN includes a processor, a receiver, and a transmitter. The processor is configured to support the core network node in performing a corresponding function in the foregoing method. The receiver and the transmitter are configured to support communication between the core network node in the VPLMN and a terminal, communication between the core network node in the VPLMN and a first core network node in an HPLMN, and communication between the core network node in the VPLMN and a second core network node in the HPLMN, to exchange the information in the foregoing method. The core network node in the VPLMN may further include a memory. The memory is configured to be coupled to the processor, and the memory stores a necessary program instruction and data of the core network node.

According to a third aspect, a first core network node in an HPLMN is provided, and has a function of implementing the behavior of the first core network node in the HPLMN in the foregoing method designs. The function may be implemented by hardware, or may be implemented by hardware by executing corresponding software. The hardware or the software includes one or more modules corresponding to the function.

In a possible design, a structure of the first core network node in the HPLMN includes a receiver and a transmitter. The receiver and the transmitter are configured to support communication between the first core network node in the HPLMN and a core network node in a VPLMN, and communication between the first core network node in the HPLMN and a second core network node in the HPLMN, to exchange the information in the foregoing method.

According to a fourth aspect, a second core network node in an HPLMN is provided, and has a function of implementing the behavior of the second core network node in the HPLMN in the foregoing method designs. The function may be implemented by hardware, or may be implemented by hardware by executing corresponding software. The hardware or the software includes one or more modules corresponding to the function.

In a possible design, a structure of the second core network node in the HPLMN includes a processor, a receiver, and a transmitter. The processor is configured to support the second core network node in the HPLMN in performing a corresponding function in the foregoing method. The receiver and the transmitter are configured to support communication between the second core network node in the HPLMN and a core network node in a VPLMN, and communication between the second core network node in the HPLMN and a first core network node in the HPLMN, to exchange the information in the foregoing method.

According to a fifth aspect, a communications system is provided. The communications system includes the core network node in the VPLMN, the first core network node in the HPLMN, and the second core network node in the HPLMN in the foregoing aspects.

According to a sixth aspect, an embodiment of the present invention provides a computer storage medium, configured to store a computer software instruction used by the foregoing core network node in the VPLMN, and the computer software instruction includes a program designed for performing the foregoing aspects.

According to a seventh aspect, an embodiment of the present invention provides a computer storage medium, configured to store a computer software instruction used by the foregoing first core network node in the HPLMN, and the computer software instruction includes a program designed for performing the foregoing aspects.

According to an eighth aspect, an embodiment of the present invention provides a computer storage medium, configured to store a computer software instruction used by the foregoing second core network node in the HPLMN, and the computer software instruction includes a program designed for performing the foregoing aspects.

Compared with an existing secure communication method for a roaming terminal, in the secure communication method provided in the embodiments of the present invention, a security key in the HPLMN can be prevented from being obtained by the VPLMN, thereby protecting end-to-end security between UE and the HPLMN network. In addition, in the embodiments of the present invention, the HLR/HSS does not need to directly interact with the second core network node in the HPLMN. Therefore, an interface between the second core network node in the HPLMN and the HLR/HSS can be prevented from being enabled.

### BRIEF DESCRIPTION OF DRAWINGS

FIG. 1 is a schematic architectural diagram of a communication scenario to which an embodiment of the present invention is applicable;
FIG. 2 is a schematic architectural diagram of a GPRS system;
FIG. 3 is a schematic architectural diagram of an SAE system;
FIG. 4A and FIG. 4B are an implementation flowchart of a key agreement process in a secure communication method in a GPRS scenario according to an embodiment of the present invention;
FIG. 5A-1 to FIG. 5B-2 are implementation flowcharts of a secure communication method in a GPRS scenario according to embodiments of the present invention;
FIG. 6A and FIG. 6B are an implementation flowchart of a key agreement process in a secure communication method in an SAE scenario according to an embodiment of the present invention;
FIG. 7A-1 to FIG. 7C-2 are implementation flowcharts of a secure communication method in an SAE scenario according to embodiments of the present invention;
FIG. 8 is a schematic structural diagram of a core network node in a VPLMN according to an embodiment of the present invention;
FIG. 9 is another schematic structural diagram of a core network node in a VPLMN according to an embodiment of the present invention;
FIG. 10 is a schematic structural diagram of a first core network node in an HPLMN according to an embodiment of the present invention;
FIG. 11 is another schematic structural diagram of a first core network node in an HPLMN according to an embodiment of the present invention;
FIG. 12 is a schematic structural diagram of a second core network node in an HPLMN according to an embodiment of the present invention; and
FIG. 13 is another schematic structural diagram of a second core network node in an HPLMN according to an embodiment of the present invention.

### DESCRIPTION OF EMBODIMENTS

The following describes the technical solutions in the embodiments of the present invention in detail with reference to the accompanying drawings in the embodiments of the present invention.

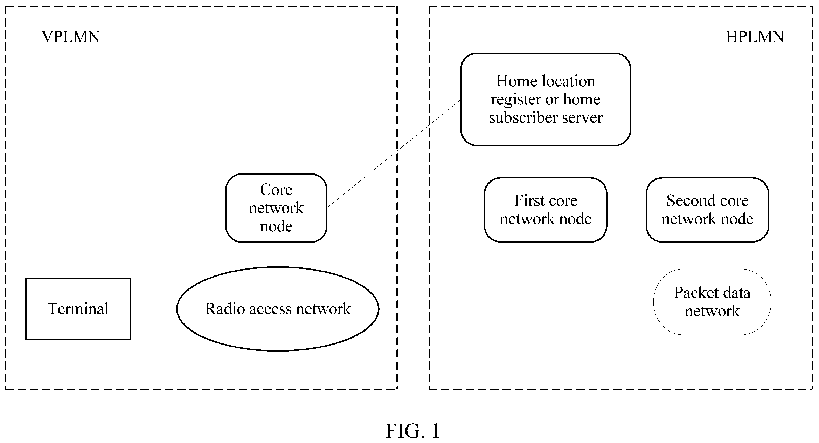

A communication method provided in the embodiments of the present invention is applicable to a communications architecture, shown in FIG. 1, in a roaming scenario. In FIG. 1, a terminal accesses a visited public land mobile network (Visited Public Land Mobile Network, VPLMN) by using a radio access network. A home location register (Home Location Register, HLR) or a home subscriber server (Home Subscriber Server, HSS) in a home public land mobile network (Home Public Land Mobile Network, HPLMN) can generate a security key used for secure communication between the terminal and a second core network node in the HPLMN. After a core network node in the VPLMN completes security authentication on a terminal that has roamed to the VPLMN network, the terminal may access, by using the second core network node in the HPLMN network, an application server corresponding to a packet data network (Packet Data Network, PDN).

In this embodiment of the present invention, to prevent the VPLMN network from obtaining a communication key used in the HPLMN network, a first core network node in the HPLMN network may route signaling (data authentication request) related to authentication and key agreement (Authentication and Key Agreement, AKA) in the VPLMN network to the HPLMN network, and further send the signaling to the HLR or the HSS in the HPLMN network, the first core network node in the HPLMN network delivers the security key generated by the HLR or the HSS to the second core network node in the HPLMN network, and the second core network node in the HPLMN network selects a security algorithm used to perform communication with the terminal, to ensure that a key used in the HPLMN network is not obtained by the VPLMN network, thereby ensuring end-to-end security of communication between UE and the HPLMN network.

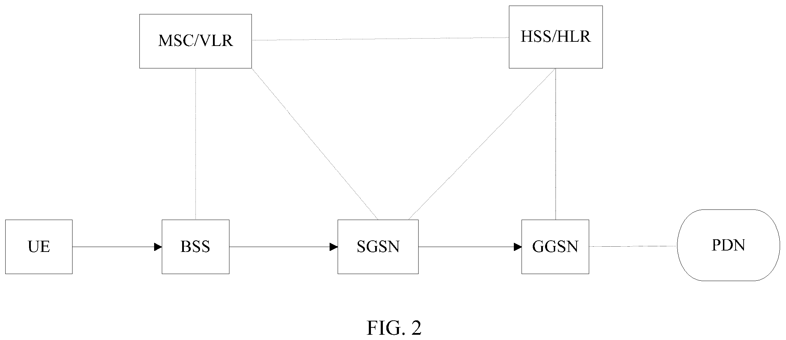

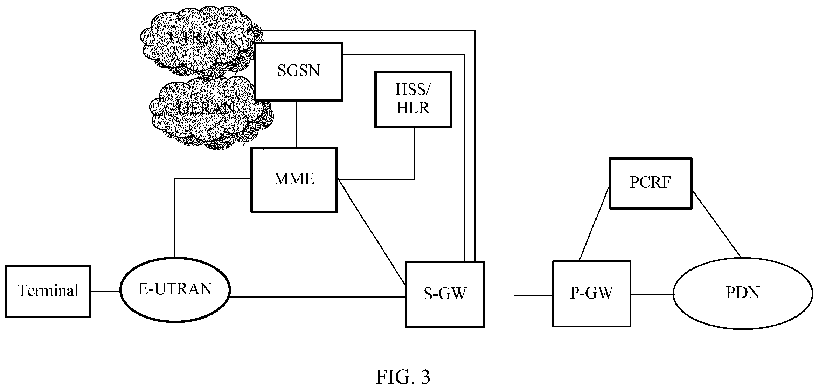

The communication method provided in the embodiments of the present invention is applicable to a general packet radio service (General Packet Radio Service, GPRS) system shown in FIG. 2 or a system architecture evolution (System Architecture Evolution, SAE) system shown in FIG. 3.

In the GPRS system, a core network node in a VPLMN network may be a serving GPRS support node (Serving GPRS Support Node, SGSN) in the VPLMN network. For ease of description, the SGSN in the VPLMN network is referred to as an SGSN-V below in the embodiments of the present invention. A first core network node in an HPLMN network may be an SGSN in the HPLMN network. For ease of description, the SGSN in the HPLMN network is referred to as an SGSN-H below in the embodiments of the present invention. A second core network node in the HPLMN network may be a gateway GPRS support node (Gateway GPRS Support Node, GGSN) in the HPLMN network. For ease of description, the GGSN in the HPLMN network is referred to as a GGSN-H below in the embodiments of the present invention.

In the SAE system, a core network node in a VPLMN network may be a mobility management entity (Mobility Management Entity, MME) in the VPLMN network. For ease of description, the MME in the VPLMN network is referred to as an MME-V below in the embodiments of the present invention. A first core network node in an HPLMN network may be an MME in the HPLMN network. For ease of description, the MME in the HPLMN network is referred to as an MME-H below in the embodiments of the present invention. A second core network node in the HPLMN network may be a packet data network gateway (Packet Data Network Gateway, P-GW) entity in the HPLMN network. For ease of description, the P-GW in the HPLMN network is referred to as a P-GW-H below in the embodiments of the present invention.

In the embodiments of the present invention, nouns "network" and "system" are usually interchangeably used, but meanings of the nouns may be understood by a person skilled in the art. The terminal may include various handheld devices, in-vehicle devices, wearable devices, or computing devices with a wireless communication function, other processing devices connected to a wireless modem, or user equipment (User Equipment, UE), a mobile station (Mobile station, MS), a terminal (terminal), a terminal device (Terminal Equipment), and the like that are in various forms.

The term "a plurality of" in the embodiments of the present invention means "at least two". The term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects.

The secure communication method in the embodiments of the present invention is described in detail below by separately using the GPRS system and the SAE system as examples in the embodiments of the present invention. It may be understood that in the embodiments of the present invention, an SGSN-V/MME-V in the following embodiments and the accompanying drawings may be replaced with a core network node in a VPLMN, an SGSN-H/MME-H may be replaced with a first core network node in an HPLMN, and a GGSN-H/P-GW-H may be replaced with a second core network node in the HPLMN.

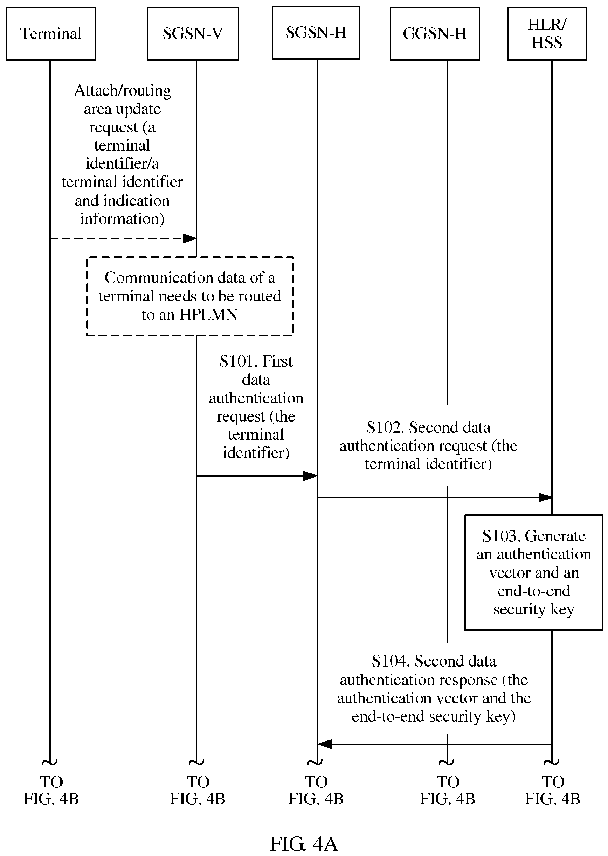

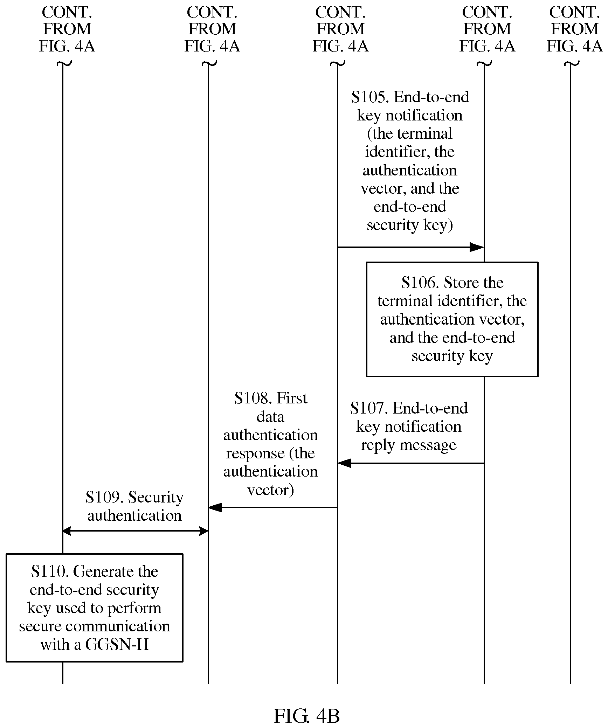

FIG. 4A and FIG. 4B are an implementation flowchart of a key agreement process in a secure communication method in a GPRS system according to an embodiment of the present invention. As shown in FIG. 4A and FIG. 4B, the process includes the following steps.

S101. An SGSN-V sends a first data authentication request to an SGSN-H.

In this embodiment of the present invention, the SGSN-V may send a data authentication request to the SGSN-H, to route AKA signaling to an HPLMN network. For ease of description, the data authentication request sent by the SGSN-V to the SGSN-H is referred to as the first data authentication request below in this embodiment of the present invention. The first data authentication request may include a terminal identifier of a terminal that has roamed to the VPLMN. In this embodiment of the present invention, the terminal identifier may be an international mobile subscriber identity (International Mobile Subscriber Identification Number, IMSI), a temporary mobile subscriber identity (Temporary Mobile Subscriber Identity, TMSI), or a globally unique temporary UE identity (Globally Unique Temporary UE Identity, GUTI).

Optionally, in this embodiment of the present invention, the SGSN-V may send the first data authentication request to the SGSN-H when determining that communication data of the terminal in the VPLMN needs to be routed to a core network node in the HPLMN.

In this embodiment of the present invention, the SGSN-V may determine, in the following manners, that the communication data of the terminal in the VPLMN needs to be routed to the core network node in the HPLMN:
In a first manner, the terminal that has roamed to the VPLMN sends the terminal identifier to the SGSN-V. The terminal identifier may be included in an attach or routing area update request sent by the terminal to the SGSN-V, and the terminal identifier can indicate that the communication data of the terminal needs to be routed to the core network node in the HPLMN. In this case, the SGSN-V may determine, based on the terminal identifier sent by the terminal, that the communication data of the terminal in the VPLMN needs to be routed to the core network node in the HPLMN.

In a second manner, the terminal that has roamed to the VPLMN sends the terminal identifier and indication information to the SGSN-V The terminal identifier and the indication information may be included in an attach or routing area update request sent by the terminal to the SGSN-V, the terminal identifier cannot indicate that the communication data of the terminal in the VPLMN needs to be routed to the core network node in the HPLMN, and the indication information is used to indicate that the communication data of the terminal needs to be routed to the core network node in the HPLMN. In this case, the SGSN-V may determine, based on the indication information sent by the terminal, that the communication data of the terminal in the VPLMN needs to be routed to the core network node in the HPLMN.

S102. The SGSN-H receives the first data authentication request sent by the SGSN-V, and sends a second data authentication request to an HLR or an HSS.

For ease of description, a data authentication request sent by the SGSN-H to the HLR or the HSS is referred to as the second data authentication request in this embodiment of the present invention. The second data authentication request includes the terminal identifier of the terminal that has roamed to the VPLMN.

S103. The HLR or the HSS searches for subscription information of a terminal based on a terminal identifier included in the second data authentication request sent by the SGSN-H, and generates an authorization vector (Authorization vectors, AV) and an end-to-end security key.

In this embodiment of the present invention, the authorization vector is used by the SGSN-V to perform security authentication on the terminal, and the end-to-end security key is used to protect secure communication between the terminal and a second core network node in the HPLMN.

The end-to-end security key may include, for example, a ciphering key (Ciphering Key, CK) and an integrity key (Integrity Key, IK). For ease of description, the CK included in the end-to-end security key may be referred to as Kc_m2m, and the IK included in the end-to-end security key may be referred to as Ki_m2m.

In this embodiment of the present invention, after receiving the second data authentication request sent by the SGSN-H, the HLR/HSS not only generates the authorization vector AV, but also generates the end-to-end security key (Kc_m2m and Ki_m2m). This is different from the prior art.

S104. The HLR/HSS sends a second data authentication response to the SGSN-H, where the second data authentication response includes the authorization vector AV and the end-to-end security key (Kc_m2m and Ki_m2m), to send the generated authorization vector AV and end-to-end security key (Kc_m2m and Ki_m2m) to the SGSN-H.

S105. The SGSN-H receives the second data authentication response sent by the HLR/HSS, obtains the authorization vector AV and the end-to-end security key (Kc_m2m and Ki_m2m), and sends an end-to-end key notification to a GGSN-H, where the end-to-end key notification includes the end-to-end security key (Kc_m2m and Ki_m2m) and the terminal identifier (for example, an IMSI) of the terminal that has roamed to the VPLMN.

In S101, the SGSN-V may select the GGSN-H that is to perform secure communication with the terminal, and add an address of the selected GGSN-H to the first data authentication request sent to the SGSN-H. Therefore, in S105, the SGSN-H may send, to the corresponding GGSN-H based on the address that is of the GGSN-H and that is included in the first data authentication request, the end-to-end security key (Kc_m2m and Ki_m2m) and the terminal identifier (for example, an IMSI) of the terminal that has roamed to the VPLMN.

S106. The GGSN-H receives the end-to-end key notification sent by the GGSN-H, and stores the end-to-end security key (Kc_m2m and Ki_m2m) and the terminal identifier (for example, an IMSI) of the terminal that has roamed to the VPLMN, where the end-to-end security key and the terminal identifier are in the end-to-end key notification, and there is a fixed correspondence between the end-to-end security key (Kc_m2m and Ki_m2m) and the terminal identifier of the terminal that has roamed to the VPLMN.

S107. The GGSN-H sends an end-to-end key notification reply message to the SGSN-H.

S108. The SGSN-H sends a first data authentication response to the SGSN-V, where the first data authentication response includes the authorization vector AV.

It should be noted that, no limitation is imposed on an execution order of S108 in which the SGSN-H sends the first data authentication response to the SGSN-V and S105 in which the SGSN-H sends the end-to-end key notification to the GGSN-H.

S109. The terminal and the SGSN-V perform security authentication and key agreement based on the authorization vector included in the first data authentication response.

S110. The terminal generates the end-to-end security key used to perform secure communication with the GGSN-H.

In this embodiment of the present invention, key agreement is performed between the terminal and the SGSN-V, so that the terminal obtains the end-to-end security key used for secure communication between the terminal and the second core network node in the HPLMN. Algorithm agreement is performed between the terminal and the GGSN-H to obtain an end-to-end security algorithm. The GGSN-H performs, based on the end-to-end security key and the end-to-end security algorithm, secure communication with the terminal corresponding to the terminal identifier.

In this embodiment of the present invention, algorithm agreement between the terminal and the GGSN-H may be performed by using a Packet Data Protocol (Packet Data Protocol, PDP) context activation procedure, to obtain the end-to-end security algorithm.

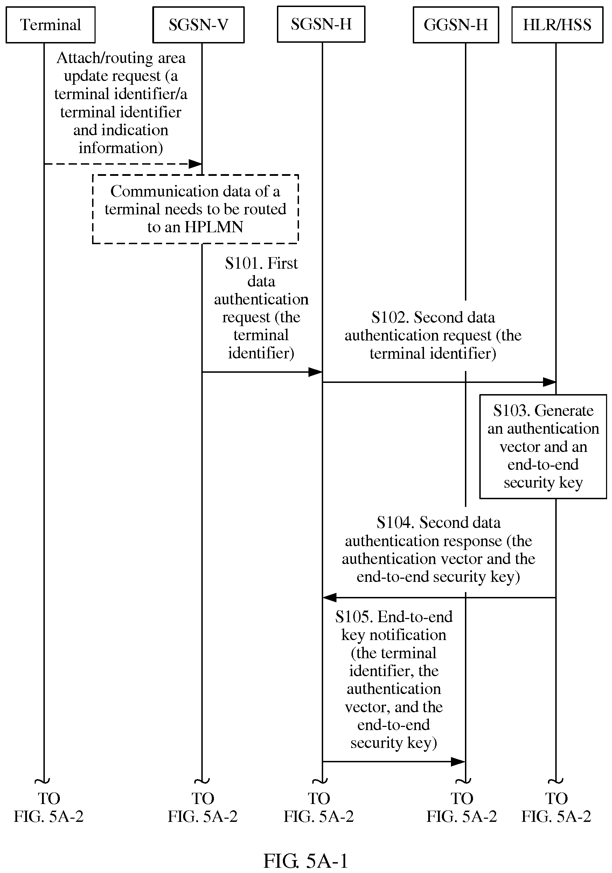

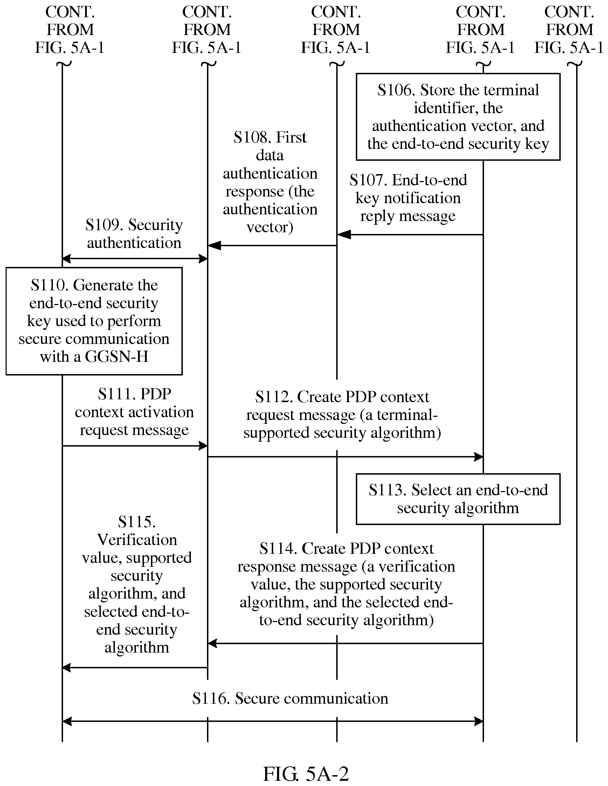

FIG. 5A-1 and FIG. 5A-2 are an implementation flowchart of a secure communication method in a GPRS system according to an embodiment of the present invention. A key agreement process in the secure communication method shown in FIG. 5A-1 and FIG. 5A-2 may be implemented by using the method process shown in FIG. 4A and FIG. 4B. Details are not described herein again. An algorithm agreement process is mainly described below. An implementation process is as follows:
Sill. The terminal sends a PDP context activation request message to the SGSN-V, where the PDP context activation request message includes a terminal-supported security algorithm.
S112. The SGSN-V sends a create PDP context request message to the GGSN-H, where the create PDP context request message includes the terminal-supported security algorithm.
S113. The GGSN-H obtains the create PDP context request message sent by the SGSN-V, determines the terminal-supported security algorithm based on the create PDP context request message, and selects an end-to-end security algorithm from the terminal-supported security algorithm, where the end-to-end security algorithm may include, for example, an integrity protection algorithm alg_int_H, and certainly may also include an encryption protection algorithm alg_enc_H.
S114. The GGSN-H returns a create PDP context response message to the SGSN-V, where the create PDP context response message includes the end-to-end security algorithm selected by the second core network node in the HPLMN.

Optionally, in this embodiment of the present invention, the GGSN-H may perform integrity protection on the terminal-supported security algorithm and the selected end-to-end security algorithm based on the integrity protection algorithm and the integrity key, to generate a message verification value MAC-I_H; and send the message verification value, the terminal-supported security algorithm, and the selected end-to-end security algorithm to the terminal corresponding to the terminal identifier. To be specific, the create PDP context response message includes the verification value, the terminal-supported security algorithm, and the selected end-to-end security algorithm.

In this embodiment of the present invention, the message verification value generated by the GGSN-H is used to enable the terminal to identify that the end-to-end security algorithm is exactly sent by the GGSN-H.

S115. The SGSN-V receives the create PDP context response message returned by the GGSN-H, and sends a verification value, the terminal-supported security algorithm, and the selected end-to-end security algorithm that are included in the create PDP context response message to the terminal corresponding to the terminal identifier.

S116. The terminal performs secure communication with the GGSN-H based on the end-to-end security key and the end-to-end security algorithm.

In this embodiment of the present invention, algorithm agreement between the terminal and the GGSN-H may be performed in the key agreement process.

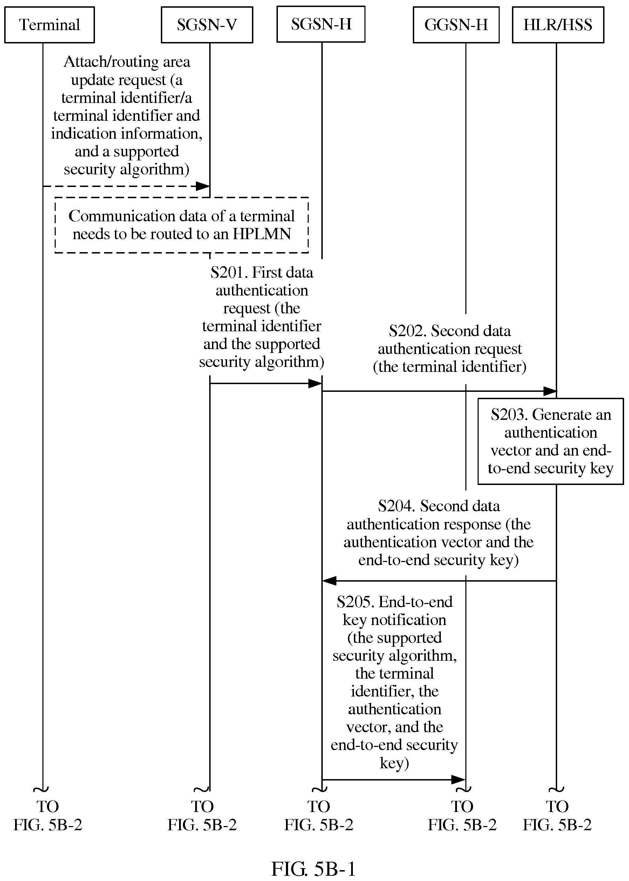

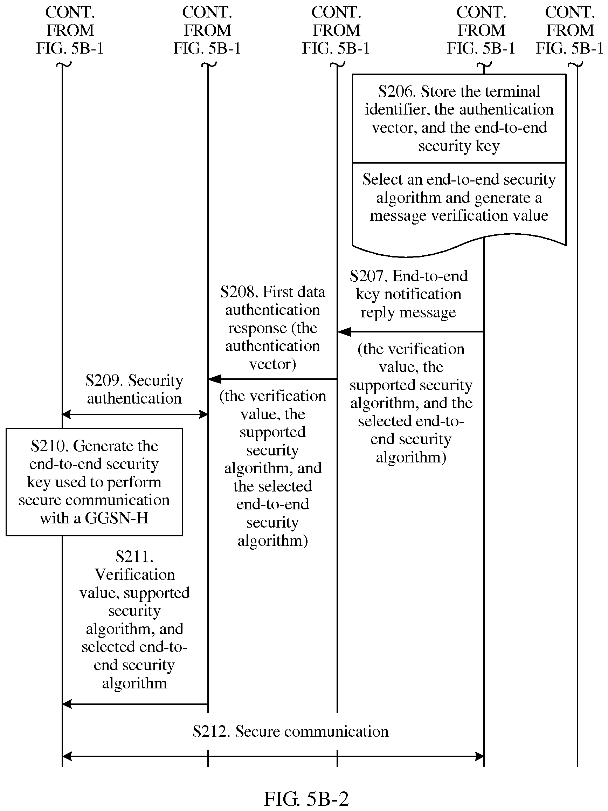

FIG. 5B-1 and FIG. 5B-2 are another implementation flowchart of a secure communication method in a GPRS system according to an embodiment of the present invention. As shown in FIG. 5B-1 and FIG. 5B-2, the method includes the following steps.

S201, S202, S203, S204, and S205 are respectively similar to S101, S102, S103, S104, and S105 in FIG. 4A and FIG. 4B, but a difference lies in that the first data authentication request sent by the SGSN-V to the SGSN-H and the end-to-end key notification sent by the SGSN-H to the GGSN-H further include a terminal-supported security algorithm.

S206 is similar to S106, but a difference lies in that in this step, the GGSN-H may select, based on the terminal-supported security algorithm included in the end-to-end key notification, an end-to-end security algorithm used to perform secure communication with the terminal, and send the selected end-to-end security algorithm to the SGSN-H by using an end-to-end key notification reply message.

Similarly, in this step, the GGSN-H may also generate a message verification value.

S207. The GGSN-H sends an end-to-end key notification reply message to the SGSN-H. Unlike S107, the end-to-end key notification reply message further includes the end-to-end security algorithm selected by the GGSN-H.

If the GGSN-H generates the message verification value, the end-to-end key notification reply message includes the message verification value, the terminal-supported security algorithm, and the end-to-end security algorithm that is selected by the second core network node in the HPLMN.

S208. The SGSN-H sends a first data authentication response to the SGSN-V. Unlike S108, the first data authentication response further includes the end-to-end security algorithm selected by the GGSN-H.

If the GGSN-H generates the message verification value, the first data authentication response further includes the message verification value, the terminal-supported security algorithm, and the end-to-end security algorithm that is selected by the second core network node in the HPLMN.

Similar to S109, in S209, security authentication and key agreement are performed based on an authorization vector included in the first data authentication response.

Similar to S110, in S210, the terminal generates the end-to-end security key used to perform secure communication with the GGSN-H.

S211. The SGSN-V sends the end-to-end security algorithm that is included in the first data authentication response and that is selected by the GGSN-H to the terminal corresponding to the terminal identifier.

If the GGSN-H generates the message verification value, the SGSN-V sends the message verification value, the terminal-supported security algorithm, and the end-to-end security algorithm that is selected by the GGSN-H to the terminal corresponding to the terminal identifier.

S212. The terminal performs secure communication with the GGSN-H based on the end-to-end security key and the end-to-end security algorithm.

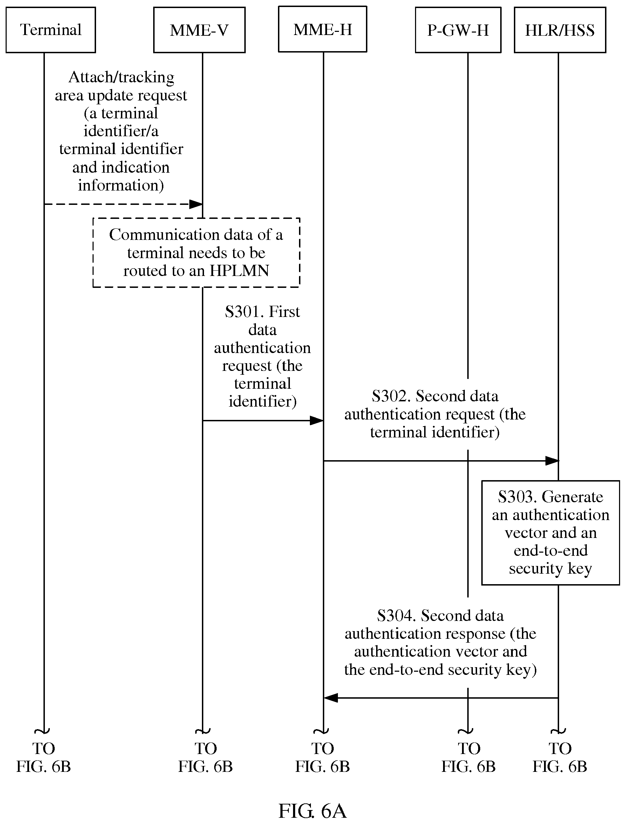

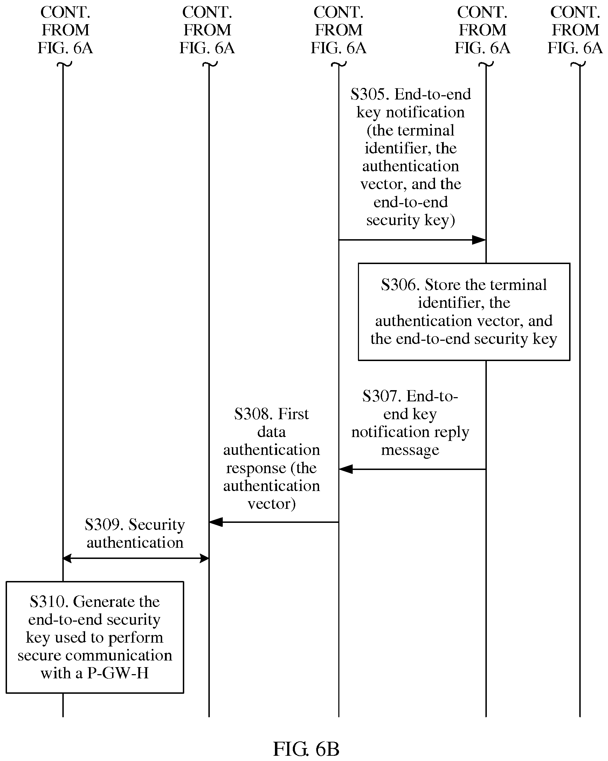

FIG. 6A and FIG. 6B are an implementation flowchart of key agreement in a secure communication method in an SAE system according to an embodiment of the present invention.

S301, S302, S303, S304, S305, S306, S307, S308, S309, and S310 in FIG. 6A and FIG. 6B are respectively the same as S101, S102, S103, S104, S105, S106, S107, S108, S109, and S110 in FIG. 4A and FIG. 4B, but a difference lies in that the SGSN-V is replaced with an MME-V, the SGSN-H is replaced with an MME-H, and the GGSN-H is replaced with a P-GW-H.

It should be noted that, in the SAE system, the MME-V may determine, based on a terminal identifier or indication information that is sent by a terminal to the MME-V, that communication data of the terminal in the VPLMN needs to be routed to a core network node in an HPLMN. The terminal identifier or the indication information may be included in an attach or tracking area update request. To be specific, the MME-V may determine, based on the terminal identifier that is included in the attach or tracking area update request sent by the terminal to the MME-V and that can indicate that the communication data of the terminal needs to be routed to the core network node in the HPLMN, or based on the terminal identifier and the indication information that are included in the attach or tracking area update request sent by the terminal to the MME-V, that the communication data of the terminal in the VPLMN needs to be routed to the core network node in the HPLMN.

In addition, it should be noted that, in a key agreement process in FIG. 6A and FIG. 6B, the MME-H may exchange information with the P-GW-H by using a serving gateway (Serving Gateway, S-GW-H) in the HPLMN.

In the SAE system, algorithm agreement between the terminal and the P-GW-H may be performed in a session establishment process, to obtain an end-to-end security algorithm.

FIG. 7A-1 and FIG. 7A-2 are an implementation flowchart of a secure communication method in an SAE system according to an embodiment of the present invention. A key agreement process in the secure communication method shown in FIG. 7A-1 and FIG. 7A-2 may be implemented by using the method process shown in FIG. 6A and FIG. 6B. Details are not described herein again. An algorithm agreement process is mainly described below. An implementation process is as follows:
S311. The MME-V sends a session establishment request message to the P-GW-H, where the session establishment request message includes a terminal-supported security algorithm.
S312. The P-GW-H obtains the session establishment request message sent by the MME-V, determines the terminal-supported security algorithm based on the session establishment request message, and selects an end-to-end security algorithm from the terminal-supported security algorithm, where the end-to-end security algorithm may include, for example, an integrity protection algorithm alg_int_H, and certainly may also include an encryption protection algorithm alg_enc_H.
S313. The P-GW-H returns a session establishment response message to the MME-V, where the session establishment response message includes the end-to-end security algorithm selected by the second core network node in the HPLMN.

Optionally, in this embodiment of the present invention, the P-GW-H may perform integrity protection on the terminal-supported security algorithm and the selected end-to-end security algorithm based on the integrity protection algorithm and the integrity key, to generate a message verification value MAC-I_H; and send the message verification value, the terminal-supported security algorithm, and the selected end-to-end security algorithm to the terminal corresponding to the terminal identifier. To be specific, the session establishment response message includes the verification value, the terminal-supported security algorithm, and the selected end-to-end security algorithm.

In this embodiment of the present invention, the message verification value generated by the GGSN-H is used to enable the terminal to identify that the end-to-end security algorithm is exactly sent by the GGSN-H.

S314. The MME-V receives the session establishment response message returned by the P-GW-H, and sends the selected end-to-end security algorithm included in the session establishment response message to the terminal corresponding to the terminal identifier.

Optionally, if the P-GW-H generates the message verification value, the verification value, the terminal-supported security algorithm, and the selected end-to-end security algorithm that are included in the session establishment response message are sent to the terminal corresponding to the terminal identifier.

S315. The terminal performs secure communication with the P-GW-H based on the end-to-end security key and the end-to-end security algorithm.

It should be noted that, in FIG. 7A-1 and FIG. 7A-2, the MME-V may exchange information with the P-GW-H by using a serving gateway (Serving Gateway, S-GW-V) in the VPLMN. To be specific, the MME-V may first send the session establishment request message to the S-GW-V, and the S-GW-V sends the session establishment request message to the P-GW-H.

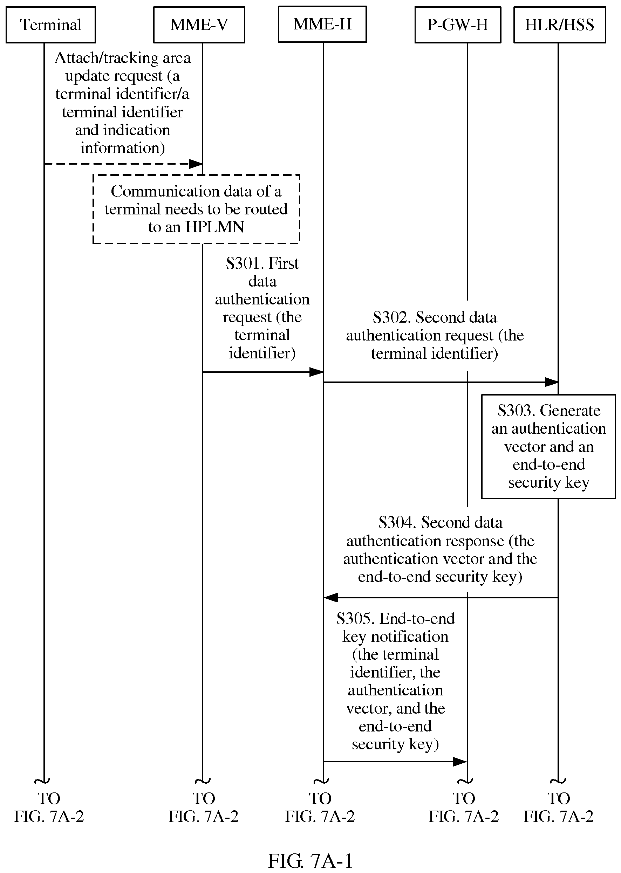

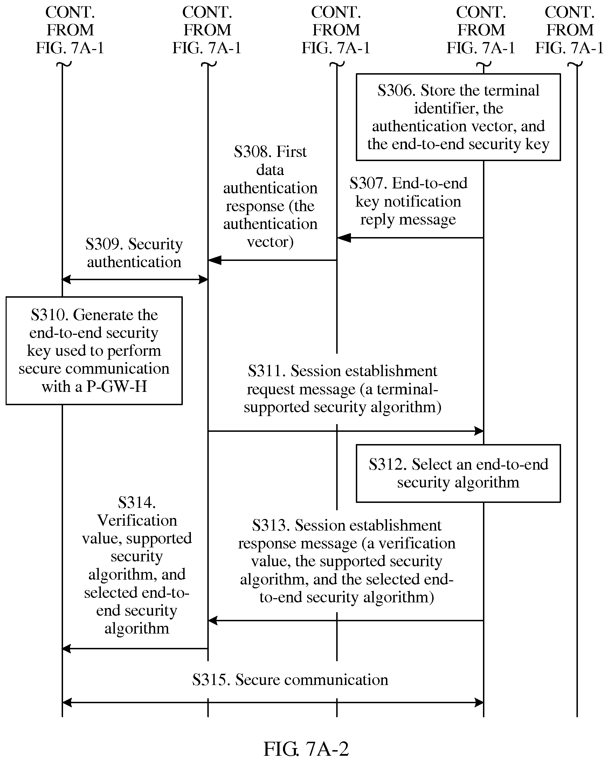

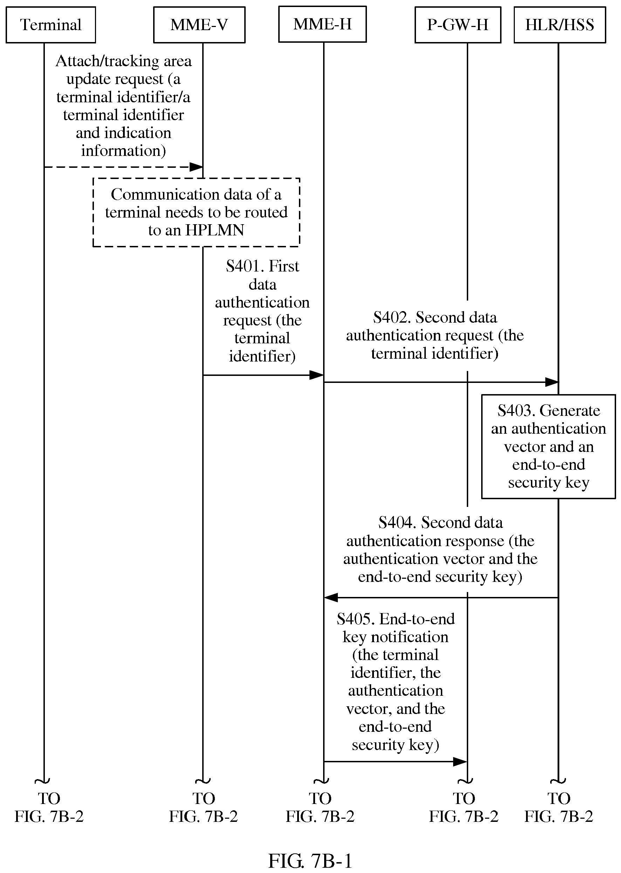

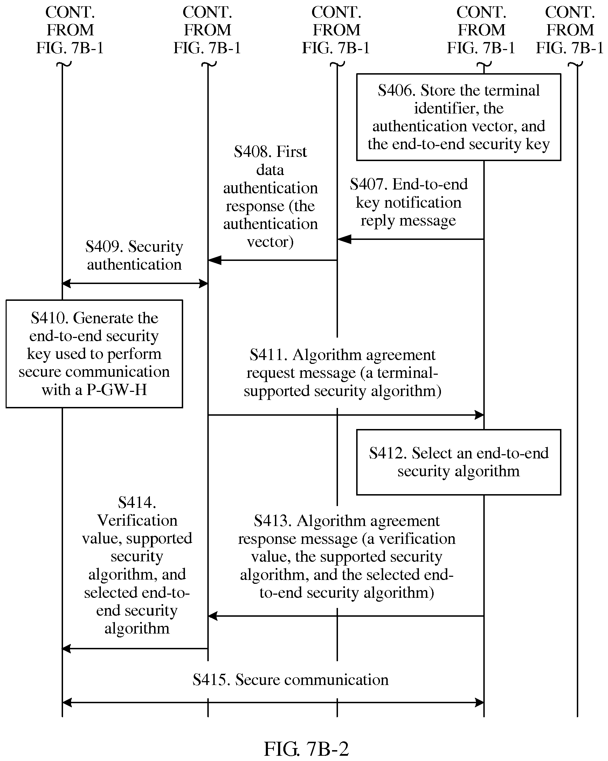

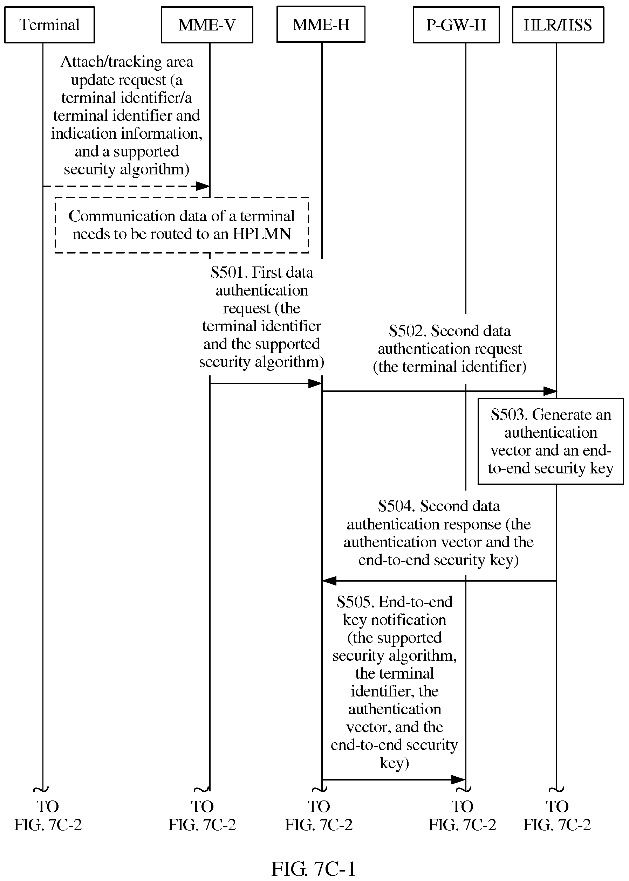

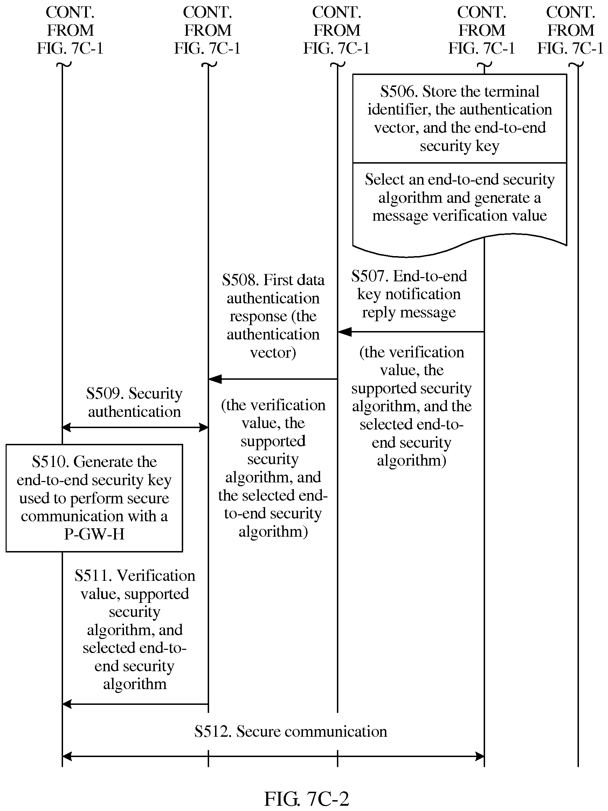

In this embodiment of the present invention, the terminal and the P-GW-H may alternatively obtain the end-to-end security algorithm by using an independent algorithm agreement process. A specific implementation process is an algorithm agreement process shown in FIG. 7.

FIG. 7B-1 and FIG. 7B-2 are another implementation flowchart of secure communication in an SAE system according to an embodiment of the present invention.

S401, S402, S403, S404, S405, S406, S407, S408, S409, and S410 in a method implementation process shown in FIG. 7B-1 and FIG. 7B-2 are respectively the same as S301, S302, S303, S304, S305, S306, S307, S308, S309, and S310 in FIG. 6A and FIG. 6B. Details are not described herein again.

S411, S412, S413, S414, and S415 are respectively similar to S311, S312, S313, S314, and S315 in FIG. 6A and FIG. 6B, but a difference lies in that the session establishment request message is replaced with an algorithm agreement request message, and the session establishment response message is replaced with an algorithm agreement response message. Therefore, details are not described herein again.

In the SAE system, algorithm agreement between the terminal and the P-GW-H may be performed in a key agreement process.

FIG. 7C-1 and FIG. 7C-2 are still another implementation flowchart of secure communication in an SAE system according to an embodiment of the present invention.

Method execution steps shown in FIG. 7C-1 and FIG. 7C-2 are similar to the method execution steps in the secure communication method shown in FIG. 5B-1 and FIG. 5B-2, but a difference lies in that the SGSN-V is replaced with an MME-V, the SGSN-H is replaced with an MME-H, and the GGSN-H is replaced with a P-GW-H.

It should be noted that, in the SAE system, the MME-V may determine, based on a terminal identifier that is included in an attach or tracking area update request sent by a terminal to the MME-V and that can indicate that communication data of the terminal needs to be routed to a core network node in an HPLMN, or based on a terminal identifier and indication information that are included in an attach or tracking area update request sent by a terminal to the MME-V, that the communication data of the terminal in the VPLMN needs to be routed to the core network node in the HPLMN.

In addition, it should be noted that, in FIG. 7C-1 and FIG. 7C-2, the MME-H may exchange information with the P-GW-H by using a serving gateway (Serving Gateway, S-GW-H) in the HPLMN.

In the secure communication method provided in the embodiments of the present invention, signaling exchange between the SGSN-V/MME-V and the SGSN-H/MME-H is added. When the SGSN-V/MME-V determines that the communication data of the terminal needs to be routed to the HPLMN, the SGSN-V/MME-V sends an authentication request message to the SGSN-H/MME-H in the HPLMN, where the authentication request message includes the terminal identifier; and the SGSN-H/MME-H forwards the authentication request message to the HLR/HSS, so that the HLR/HSS generates the end-to-end security key. The SGSN-H/MME-H sends the end-to-end security key and the terminal identifier to the GGSN-H/P-GW-H, and algorithm agreement is performed between the terminal and the GGSN-H/P-GW-H, to complete key agreement and algorithm agreement between the terminal and the GGSN-H/P-GW-H, thereby protecting end-to-end security between UE and the HPLMN network.

In addition, in this embodiment of the present invention, even if an interface between the HLR/HSS and the GGSN/P-GW in the HPLMN is not enabled, a security parameter can be sent to the GGSN/P-GW in the HPLMN network without using the VPLMN network, thereby avoiding disposing a new interface between the GGSN and the HSS.

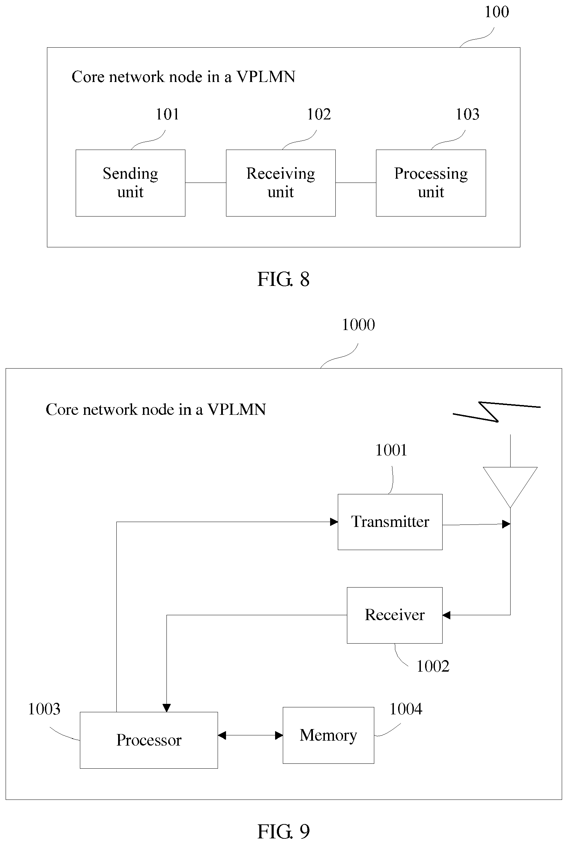

Based on the secure communication method provided in the foregoing embodiments, an embodiment of the present invention provides a core network node 100 in a VPLMN. FIG. 8 is a schematic structural diagram of the core network node 100 in the VPLMN according to this embodiment of the present invention. As shown in FIG. 8, the core network node 100 in the VPLMN includes a sending unit 101, a receiving unit 102, and a processing unit 103.

The sending unit 101 is configured to send a first data authentication request to a first core network node in an HPLMN, and the first data authentication request includes a terminal identifier of a terminal that has roamed to the VPLMN.

The receiving unit 102 is configured to receive a first data authentication response sent by the first core network node in the HPLMN based on the terminal identifier included in the first data authentication request sent by the sending unit 101, and the first data authentication response includes an authorization vector.

The processing unit 103 is configured to perform, based on the authorization vector received by the receiving unit 102, security authentication on and key agreement with the terminal corresponding to the terminal identifier. The key agreement enables the terminal to obtain an end-to-end security key used for secure communication between the terminal and a second core network node in the HPLMN.

The processing unit 103 is further configured to:
before the sending unit 101 sends the first data authentication request to the first core network node in the HPLMN, determine that communication data of the terminal in the VPLMN needs to be routed to a core network node in the HPLMN.

Specifically, the processing unit 103 is specifically configured to determine, in the following manner, that the communication data of the terminal in the VPLMN needs to be routed to the core network node in the HPLMN:
determining, based on the terminal identifier sent by the terminal, that the communication data of the terminal in the VPLMN needs to be routed to the core network node in the HPLMN, where the terminal identifier can indicate that the communication data of the terminal needs to be routed to the core network node in the HPLMN; or
determining, based on indication information sent by the terminal, that the communication data of the terminal in the VPLMN needs to be routed to the core network node in the HPLMN, where the indication information is used to indicate that the communication data of the terminal needs to be routed to the core network node in the HPLMN.

In a GPRS system, the terminal identifier and the indication information may be included in an attach or routing area update request sent by the terminal. In an SAE system, the terminal identifier and the indication information may be included in an attach or tracking area update request sent by the terminal.

Optionally, the core network node in the VPLMN is a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

Optionally, the core network node in the VPLMN is a mobility management entity MME in the VPLMN, the first core network node in the HPLMN is an MME in the HPLMN, and the second core network node in the HPLMN is a packet data network gateway in the HPLMN.

Optionally, the first data authentication request further includes a terminal-supported security algorithm. The first data authentication response further includes a message verification value, the terminal-supported security algorithm, and an end-to-end security algorithm that is selected by the second core network node in the HPLMN. The message verification value is generated by the second core network node in the HPLMN by performing integrity protection on the terminal-supported security algorithm and the end-to-end security algorithm based on an integrity protection algorithm and an integrity key. The sending unit 101 is further configured to: after the receiving unit 102 receives the first data authentication response sent by the first core network node in the HPLMN, send the message verification value, the terminal-supported security algorithm, and the end-to-end security algorithm that is selected by the second core network node in the HPLMN to the terminal corresponding to the terminal identifier.

Optionally, the sending unit 101 is further configured to: after the processing unit 103 performs security authentication on the terminal corresponding to the terminal identifier, send an algorithm agreement request to the second core network node in the HPLMN, where the algorithm agreement request includes a terminal-supported security algorithm. The receiving unit 102 is further configured to receive an algorithm agreement response message returned by the second core network node in the HPLMN. The algorithm agreement response message includes a message verification value, the terminal-supported security algorithm, and an end-to-end security algorithm that is selected by the second core network node in the HPLMN. The message verification value is generated by the second core network node in the HPLMN by performing integrity protection on the terminal-supported security algorithm and the end-to-end security algorithm based on an integrity protection algorithm and an integrity key. The sending unit 101 is further configured to send the message verification value, the terminal-supported security algorithm, and the end-to-end security algorithm that is selected by the second core network node in the HPLMN to the terminal corresponding to the terminal identifier.

Optionally, the first data authentication request further includes an address of the second core network node in the HPLMN, and the second core network node in the HPLMN is a core network node that is in the HPLMN and that is selected by the core network node in the VPLMN for the terminal for secure communication.

Based on the secure communication method provided in the foregoing embodiments, an embodiment of the present invention provides a core network node 1000 in a VPLMN. FIG. 9 is a schematic structural diagram of the core network node 1000 in the VPLMN according to this embodiment of the present invention. As shown in FIG. 9, the core network node 1000 in the VPLMN includes a transmitter 1001, a receiver 1002, a processor 1003, and a memory 1004.

The memory 1004 is configured to store program code to be executed by the processor 1003.

The processor 1003 is configured to invoke a program code stored in the memory 1004, so as to: send a first data authentication request to a first core network node in an HPLMN by using the transmitter 1001, where the first data authentication request includes a terminal identifier of a terminal that has roamed to the VPLMN; receive, by using the receiver 1002, a first data authentication response sent by the first core network node in the HPLMN based on the terminal identifier included in the first data authentication request, where the first data authentication response includes an authorization vector; and perform, based on the received authorization vector, security authentication on and key agreement with the terminal corresponding to the terminal identifier. The key agreement enables the terminal to obtain an end-to-end security key used for secure communication between the terminal and a second core network node in the HPLMN.

The processor 1003 further performs a processing process of the core network node (SGSN-V/MME-V) in the VPLMN in FIG. 4A and FIG. 4B to FIG. 7C-1 and FIG. 7C-2 and/or other processes used for the technologies described in this application. The receiver 1002 and the transmitter 1001 are configured to support communication between the core network node (SGSN-V/MME-V) in the VPLMN and the second core network node (GGSN-H/P-GW-H) in the HPLMN, and communication between the core network node (SGSN-V/MME-V) in the VPLMN and the first core network node (SGSN-H/MME-H) in the HPLMN, to exchange the information in the foregoing method. Details are not described herein again.

An embodiment of the present invention provides a computer storage medium, configured to store a computer software instruction used by the foregoing core network node in the VPLMN, and the computer software instruction includes a program designed for performing the foregoing embodiments.

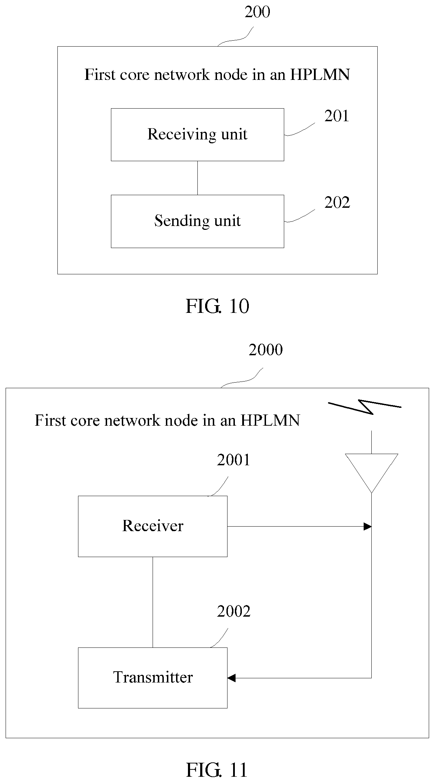

Based on the secure communication method provided in the foregoing embodiments, an embodiment of the present invention further provides a first core network node 200 in an HPLMN. The HPLMN includes a second core network node different from the core network node. FIG. 10 is a schematic structural diagram of the first core network node 200 in the HPLMN according to this embodiment of the present invention. As shown in FIG. 10, the first core network node 200 in the HPLMN includes a receiving unit 201 and a sending unit 202.

The receiving unit 201 is configured to: receive a first data authentication request sent by a core network node in a VPLMN, and receive a second data authentication response sent by the HLR or the HSS, where the second data authentication response includes an authorization vector and an end-to-end security key, the end-to-end security key is used to protect secure communication between the terminal and the second core network node in the HPLMN, and the first data authentication request includes a terminal identifier of the terminal that has roamed to the VPLMN.

The sending unit 202 is configured to: send a second data authentication request to the home location register HLR or the home subscriber server HSS based on the first data authentication request received by the receiving unit 201, send an end-to-end key notification to the second core network node in the HPLMN, and return a first data authentication response to the core network node in the VPLMN.

The second data authentication request includes the terminal identifier of the terminal that has roamed to the VPLMN, the end-to-end key notification includes the terminal identifier and the end-to-end security key, the first data authentication response includes the authorization vector, and the authorization vector is used by the core network node in the VPLMN to perform, based on the authorization vector, security authentication on and key agreement with the terminal corresponding to the terminal identifier.

Optionally, the first core network node 200 is a serving general packet radio service GPRS support node SGSN in the HPLMN, the core network node in the VPLMN is an SGSN in the VPLMN, and the second core network node in the HPLMN is a gateway general packet radio service GPRS support node in the HPLMN.

Optionally, the first core network node 200 is a mobility management entity MME in the HPLMN, the core network node in the VPLMN is an MME in the VPLMN, and the second core network node in the HPLMN is a packet data network gateway in the HPLMN.

Optionally, the first data authentication request and the end-to-end key notification further include a terminal-supported security algorithm. The receiving unit 201 is further configured to receive an end-to-end key notification reply message that is fed back by the second core network node in the HPLMN for the end-to-end key notification. The end-to-end key notification reply message includes a message verification value, the terminal-supported security algorithm, and an end-to-end security algorithm that is selected by the second core network node in the HPLMN. The first data authentication response further includes the message verification value, the terminal-supported security algorithm, and the end-to-end security algorithm that is selected by the second core network node in the HPLMN. The message verification value is generated by the second core network node in the HPLMN by performing integrity protection on the terminal-supported security algorithm and the selected end-to-end security algorithm based on an integrity protection algorithm and an integrity key.

Optionally, the first data authentication request further includes an address of the second core network node in the HPLMN, and the second core network node in the HPLMN is a core network node that is in the HPLMN and that is selected by the core network node in the VPLMN for the terminal for secure communication. The sending unit 202 specifically sends the end-to-end key notification to the second core network node in the HPLMN in the following manner: sending the end-to-end key notification to the second core network node that is in the HPLMN and that is indicated by the address.

Based on the secure communication method provided in the foregoing embodiments, an embodiment of the present invention provides a first core network node 2000 in an HPLMN. FIG. 11 is a schematic structural diagram of the first core network node 2000 in the HPLMN according to this embodiment of the present invention. As shown in FIG. 11, the first core network node 2000 in the HPLMN includes a receiver 2001 and a transmitter 2002.

The receiver 2001 is configured to: receive a first data authentication request sent by a core network node in a VPLMN, and receive a second data authentication response sent by an HLR or an HSS, where the second data authentication response includes an authorization vector and an end-to-end security key, the end-to-end security key is used to protect secure communication between the terminal and a second core network node in the HPLMN, and the first data authentication request includes a terminal identifier of the terminal that has roamed to the VPLMN. The transmitter 2002 is configured to: send a second data authentication request to the HLR or the HSS based on the first data authentication request received by the receiver 2001, send an end-to-end key notification to the second core network node in the HPLMN, and return a first data authentication response to the core network node in the VPLMN. The second data authentication request includes the terminal identifier of the terminal that has roamed to the VPLMN, the end-to-end key notification includes the terminal identifier and the end-to-end security key, the first data authentication response includes the authorization vector, and the authorization vector is used by the core network node in the VPLMN to perform, based on the authorization vector, security authentication on and key agreement with the terminal corresponding to the terminal identifier.

The receiver 2001 and the transmitter 2002 are further configured to support communication between the first core network node (SGSN-H/MME-H) in the HPLMN shown in FIG. 4A and FIG. 4B to FIG. 7C-1 and FIG. 7C-2 in the foregoing method embodiments and the core network node (SGSN-V/MME-V) in the VPLMN and the second core network node (GGSN-H/P-GW-H) in the HPLMN, to exchange the information in the foregoing method. Details are not described herein again.

An embodiment of the present invention provides a computer storage medium, configured to store a computer software instruction used by the foregoing first core network node in the HPLMN, and the computer software instruction includes a program designed for performing the foregoing embodiments.

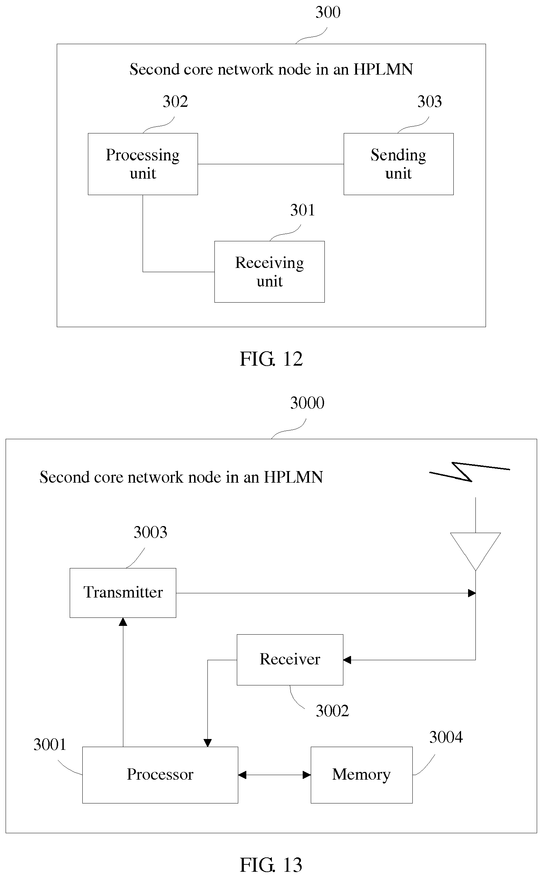

Based on the secure communication method provided in the foregoing embodiments, an embodiment of the present invention further provides a second core network node 300 in an HPLMN. FIG. 12 is a schematic structural diagram of the second core network node 300 in the HPLMN according to this embodiment of the present invention. As shown in FIG. 12, the second core network node 300 in the HPLMN includes a receiving unit 301, a processing unit 302, and a sending unit 303. The HPLMN includes a first core network node different from the core network node.

The receiving unit 301 is configured to receive an end-to-end key notification sent by the first core network node in the HPLMN. The end-to-end key notification includes a terminal identifier and an end-to-end security key, the terminal identifier is used to identify a terminal that needs to route communication data to a core network node in the HPLMN, and the end-to-end security key is generated by an HLR or an HSS of the terminal based on a second data authentication request routed by a core network node in the VPLMN to the HPLMN network, and is used to protect secure communication between the terminal and the second core network node in the HPLMN.

The processing unit 302 is configured to: select an end-to-end security algorithm based on the terminal identifier and the end-to-end security key that are included in the end-to-end key notification, and perform, based on the end-to-end security key and the end-to-end security algorithm, secure communication with the terminal corresponding to the terminal identifier.

The sending unit 303 is configured to send the end-to-end security algorithm selected by the processing unit 302 to the terminal corresponding to the terminal identifier.

Optionally, the second core network node 300 is a gateway general packet radio service GPRS support node in the HPLMN, the core network node in the VPLMN is a serving general packet radio service GPRS support node SGSN in the VPLMN, and the first core network node in the HPLMN is an SGSN in the HPLMN.

Optionally, the second core network node 300 is a gateway general packet radio service GPRS support node in the HPLMN, the core network node in the VPLMN is a mobility management entity MME in the VPLMN, and the first core network node in the HPLMN is an MME in the HPLMN.

Optionally, the first data authentication request and the end-to-end key notification further include a terminal-supported security algorithm. The end-to-end security algorithm includes an integrity protection algorithm, and the end-to-end security key includes an integrity protection key. The processing unit 302 selects the end-to-end security algorithm in the following manner: obtaining, by the second core network node in the HPLMN, the end-to-end key notification sent by the first core network node in the HPLMN, and determining the terminal-supported security algorithm based on the end-to-end key notification; and selecting, by the second core network node in the HPLMN, the end-to-end security algorithm from the terminal-supported security algorithm. The processing unit 302 is further configured to perform integrity protection on the terminal-supported security algorithm and the selected end-to-end security algorithm based on the integrity protection algorithm and the integrity key, to generate a message verification value. The sending unit 303 specifically sends, in the following manner, the selected end-to-end security algorithm to the terminal corresponding to the terminal identifier: sending an end-to-end key notification reply message to the first core network node in the HPLMN, where the end-to-end key notification reply message includes the message verification value, the terminal-supported security algorithm, and the end-to-end security algorithm that is selected by the second core network node in the HPLMN; and sending, by using the first core network node in the HPLMN and the core network node in the VPLMN, the message verification value, the terminal-supported security algorithm, and the selected end-to-end security algorithm to the terminal corresponding to the terminal identifier.

Optionally, the end-to-end security algorithm includes an integrity protection algorithm, and the end-to-end security key includes an integrity protection key. The receiving unit 301 is further configured to obtain an algorithm agreement request sent by the core network node in the VPLMN, where the algorithm agreement request includes a terminal-supported security algorithm. The processing unit 302 specifically selects the end-to-end security algorithm in the following manner: determining the terminal-supported security algorithm based on the algorithm agreement request, and selecting the end-to-end security algorithm from the terminal-supported security algorithm. The processing unit 302 is further configured to perform integrity protection on the terminal-supported security algorithm and the selected end-to-end security algorithm based on the integrity protection algorithm and the integrity key, to generate a message verification value. The sending unit 303 is specifically configured to send, in the following manner, the selected end-to-end security algorithm to the terminal corresponding to the terminal identifier: returning an algorithm agreement response message to the core network node in the VPLMN, where the algorithm agreement response message includes the message verification value, the terminal-supported security algorithm, and the end-to-end security algorithm that is selected by the second core network node in the HPLMN; and sending, by using the core network node in the VPLMN, the message verification value, the terminal-supported security algorithm, and the end-to-end security algorithm that is selected by the second core network node in the HPLMN to the terminal corresponding to the terminal identifier.

Based on the communication method provided in the foregoing embodiments, an embodiment of the present invention further provides a second core network node 3000 in an HPLMN. FIG. 13 is a schematic structural diagram of the second core network node 3000 in the HPLMN according to this embodiment of the present invention. As shown in FIG. 13, the second core network node 3000 in the HPLMN includes a processor 3001, a receiver 3002, a transmitter 3003, and a memory 3004.

The memory 3004 is configured to store program code to be executed by the processor 3001.

The processor 3001 is configured to invoke a program code stored in the memory 3004, so as to: receive, by using the receiver 3002, an end-to-end key notification sent by a first core network node in the HPLMN, select an end-to-end security algorithm based on a terminal identifier and an end-to-end security key that are included in the end-to-end key notification, send, by using the transmitter 3003, the selected end-to-end security algorithm to a terminal corresponding to the terminal identifier, and perform, based on the end-to-end security key and the end-to-end security algorithm, secure communication with the terminal corresponding to the terminal identifier.

The processor 3001 is configured to support the second core network node (GGSN-H/P-GW-H) in the HPLMN shown in FIG. 4A and FIG. 4B to FIG. 7C-1 and FIG. 7C-2 in the foregoing method embodiments in performing a corresponding function in the foregoing method. The receiver 3002 and the transmitter 3003 are configured to support communication between the second core network node (GGSN-H/P-GW-H) in the HPLMN and a core network node (SGSN-V/MME-V) in a VPLMN, and communication between the second core network node (GGSN-H/P-GW-H) in the HPLMN and the first core network node (SGSN-H/MME-H) in the HPLMN, to exchange the information in the foregoing method. Details are not described herein again.

An embodiment of the present invention provides a computer storage medium, configured to store a computer software instruction used by the foregoing second core network node in the HPLMN, and the computer software instruction includes a program designed for performing the foregoing embodiments.

An embodiment of the present invention further provides a communications system. The communications system includes the core network node in the VPLMN, the first core network node in the HPLMN, and the second core network node in the HPLMN in the foregoing embodiments, and has corresponding functions. Details are not described herein again.

In the secure communication method provided in the embodiments of the present invention for a roaming terminal, a security key in the HPLMN can be prevented from being obtained by the VPLMN, thereby protecting end-to-end security between UE and the HPLMN network. In addition, in the embodiments of the present invention, the HLR/HSS does not need to directly interact with the second core network node in the HPLMN. Therefore, an interface between the second core network node in the HPLMN and the HLR/HSS can be prevented from being enabled.

A person of ordinary skill in the art may understand that all or some steps in the method in the foregoing embodiments may be implemented by a program instructing a processor. The program may be stored in a computer readable storage medium. The storage medium is a non-transitory (English: non-transitory) medium, such as a random access memory, a read-only memory, a flash memory, a hard disk, a solid state disk, a magnetic tape (English: magnetic tape), a floppy disk (English: floppy disk), an optical disc (English: optical disc), or any combination thereof.

The present invention is described with reference to the flowcharts and/or block diagrams of the method and the device in the embodiments of the present invention. It should be understood that computer program instructions may be used to implement each process in the flowcharts and each block in the block diagrams and a combination of a process in the flowcharts and a block in the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specified function in one or more processes in the flowcharts and in one or more blocks in the block diagrams.

The foregoing descriptions are merely examples of specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A secure communication method, comprising:
sending, by a core network node in a visited public land mobile network VPLMN, a first data authentication request to a first core network node in a home public land mobile network HPLMN, wherein the first data authentication request comprises a terminal identifier of a terminal that has roamed to the VPLMN;
receiving, by the core network node in the VPLMN, a first data authentication response sent by the first core network node in the HPLMN based on the terminal identifier comprised in the first data authentication request, wherein the first data authentication response comprises an authorization vector; and
performing, by the core network node in the VPLMN based on the authorization vector, security authentication on and key agreement with the terminal corresponding to the terminal identifier, wherein
the key agreement enables the terminal to obtain an end-to-end security key used for secure communication between the terminal and a second core network node in the HPLMN.

2. The method according to claim 1, wherein before the sending, by a core network node in a VPLMN, a first data authentication request to a first core network node in an HPLMN, the method further comprises:
determining, by the core network node in the VPLMN, that communication data of the terminal in the VPLMN needs to be routed to a core network node in the HPLMN.

3. The method according to claim 2, wherein the determining, by the core network node in the VPLMN, that communication data of the terminal in the VPLMN needs to be routed to a core network node in the HPLMN comprises:
determining, by the core network node in the VPLMN based on the terminal identifier sent by the terminal, that the communication data of the terminal in the VPLMN needs to be routed to the core network node in the HPLMN, wherein the terminal identifier can indicate that the communication data of the terminal needs to be routed to the core network node in the HPLMN; or
determining, by the core network node in the VPLMN based on indication information sent by the terminal, that the communication data of the terminal in the VPLMN needs to be routed to the core network node in the HPLMN, wherein the indication information is used to indicate that the communication data of the terminal needs to be routed to the core network node in the HPLMN.

4. The method according to any one of claims 1 to 3, wherein the core network node in the VPLMN is a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

5. The method according to any one of claims 1 to 3, wherein the core network node in the VPLMN is a mobility management entity MME in the VPLMN, the first core network node in the HPLMN is an MME in the HPLMN, and the second core network node in the HPLMN is a packet data network gateway in the HPLMN.

6. The method according to any one of claims 1 to 5, wherein the first data authentication request further comprises a terminal-supported security algorithm;
the first data authentication response further comprises a message verification value, the terminal-supported security algorithm, and an end-to-end security algorithm that is selected by the second core network node in the HPLMN;
the message verification value is generated by the second core network node in the HPLMN by performing integrity protection on the terminal-supported security algorithm and the end-to-end security algorithm based on an integrity protection algorithm and an integrity key; and
after the receiving, by the core network node in the VPLMN, a first data authentication response sent by the first core network node in the HPLMN, the method further comprises:
sending, by the core network node in the VPLMN, the message verification value, the terminal-supported security algorithm, and the end-to-end security algorithm that is selected by the second core network node in the HPLMN to the terminal corresponding to the terminal identifier.

7. The method according to claim 5, wherein after the performing security authentication on the terminal corresponding to the terminal identifier, the method further comprises:
sending, by the core network node in the VPLMN, an algorithm agreement request to the second core network node in the HPLMN, wherein the algorithm agreement request comprises a terminal-supported security algorithm;
receiving, by the core network node in the VPLMN, an algorithm agreement response message returned by the second core network node in the HPLMN, wherein
the algorithm agreement response message comprises a message verification value, the terminal-supported security algorithm, and an end-to-end security algorithm that is selected by the second core network node in the HPLMN; and
the message verification value is generated by the second core network node in the HPLMN by performing integrity protection on the terminal-supported security algorithm and the end-to-end security algorithm based on an integrity protection algorithm and an integrity key; and
sending, by the core network node in the VPLMN, the message verification value, the terminal-supported security algorithm, and the end-to-end security algorithm that is selected by the second core network node in the HPLMN to the terminal corresponding to the terminal identifier.

8. The method according to any one of claims 1 to 7, wherein the first data authentication request further comprises an address of the second core network node in the HPLMN, and the second core network node in the HPLMN is a core network node that is in the HPLMN and that is selected by the core network node in the VPLMN for the terminal for secure communication.

9. A secure communication method, comprising:
receiving, by a first core network node in a home public land mobile network HPLMN, a first data authentication request sent by a core network node in a visited public land mobile network VPLMN;
sending a second data authentication request to a home location register HLR or a home subscriber server HSS based on the first data authentication request, wherein both the first data authentication request and the second data authentication request comprise a terminal identifier of a terminal that has roamed to the VPLMN;
receiving, by the first core network node in the HPLMN, a second data authentication response sent by the HLR or the HSS based on the terminal identifier in the second data authentication request, wherein the second data authentication response comprises an authorization vector and an end-to-end security key, and the end-to-end security key is used to protect secure communication between the terminal and a second core network node in the HPLMN;
sending, by the first core network node in the HPLMN, an end-to-end key notification to the second core network node in the HPLMN, wherein the end-to-end key notification comprises the terminal identifier and the end-to-end security key; and
returning, by the first core network node in the HPLMN, a first data authentication response to the core network node in the VPLMN, wherein the first data authentication response comprises the authorization vector, and the authorization vector is used by the core network node in the VPLMN to perform, based on the authorization vector, security authentication on and key agreement with the terminal corresponding to the terminal identifier.

10. The method according to claim 9, wherein the core network node in the VPLMN is a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

11. The method according to claim 9, wherein the core network node in the VPLMN is a mobility management entity MME in the VPLMN, the first core network node in the HPLMN is an MME in the HPLMN, and the second core network node in the HPLMN is a packet data network gateway in the HPLMN.

12. The method according to any one of claims 9 to 11, wherein the first data authentication request and the end-to-end key notification further comprise a terminal-supported security algorithm; and
the method further comprises:
receiving, by the first core network node in the HPLMN, an end-to-end key notification reply message that is fed back by the second core network node in the HPLMN for the end-to-end key notification, wherein
the end-to-end key notification reply message comprises a message verification value, the terminal-supported security algorithm, and an end-to-end security algorithm that is selected by the second core network node in the HPLMN;
the first data authentication response further comprises the message verification value, the terminal-supported security algorithm, and the end-to-end security algorithm that is selected by the second core network node in the HPLMN; and
the message verification value is generated by the second core network node in the HPLMN by performing integrity protection on the terminal-supported security algorithm and the selected end-to-end security algorithm based on an integrity protection algorithm and an integrity key.

13. The method according to any one of claims 9 to 12, wherein the first data authentication request further comprises an address of the second core network node in the HPLMN, and the second core network node in the HPLMN is a core network node that is in the HPLMN and that is selected by the core network node in the VPLMN for the terminal for secure communication; and
the sending, by the first core network node in the HPLMN, an end-to-end key notification to the second core network node in the HPLMN comprises:
sending, by the first core network node in the HPLMN, the end-to-end key notification to the second core network node that is in the HPLMN and that is indicated by the address.

14. A secure communication method, comprising:
receiving, by a second core network node in a home public land mobile network HPLMN, an end-to-end key notification sent by a first core network node in the HPLMN, wherein
the end-to-end key notification comprises a terminal identifier and an end-to-end security key, the terminal identifier is used to identify a terminal that needs to route communication data to a core network node in the HPLMN, and the end-to-end security key is generated by a home location register HLR or a home subscriber server HSS of the terminal based on a second data authentication request routed by a core network node in the VPLMN to the HPLMN network, and is used to protect secure communication between the terminal and the second core network node in the HPLMN;
selecting, by the second core network node in the HPLMN, an end-to-end security algorithm based on the terminal identifier and the end-to-end security key that are comprised in the end-to-end key notification, and sending the selected end-to-end security algorithm to the terminal corresponding to the terminal identifier; and
performing, by the second core network node in the HPLMN based on the end-to-end security key and the end-to-end security algorithm, secure communication with the terminal corresponding to the terminal identifier.

15. The method according to claim 14, wherein the core network node in the VPLMN is a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

16. The method according to claim 14, wherein the core network node in the VPLMN is a mobility management entity MME in the VPLMN, the first core network node in the HPLMN is an MME in the HPLMN, and the second core network node in the HPLMN is a packet data network gateway in the HPLMN.

17. The method according to any one of claims 14 to 16, wherein the first data authentication request and the end-to-end key notification further comprise a terminal-supported security algorithm;
the end-to-end security algorithm comprises an integrity protection algorithm, and the end-to-end security key comprises an integrity protection key; and
the selecting, by the second core network node in the HPLMN, an end-to-end security algorithm, and sending the selected end-to-end security algorithm to the terminal corresponding to the terminal identifier comprises:
obtaining, by the second core network node in the HPLMN, the end-to-end key notification sent by the first core network node in the HPLMN, and determining the terminal-supported security algorithm based on the end-to-end key notification;
selecting, by the second core network node in the HPLMN, the end-to-end security algorithm from the terminal-supported security algorithm;
performing, by the second core network node in the HPLMN, integrity protection on the terminal-supported security algorithm and the selected end-to-end security algorithm based on the integrity protection algorithm and the integrity key, to generate a message verification value;
sending, by the second core network node in the HPLMN, an end-to-end key notification reply message to the first core network node in the HPLMN, wherein the end-to-end key notification reply message comprises the message verification value, the terminal-supported security algorithm, and the end-to-end security algorithm that is selected by the second core network node in the HPLMN; and
sending, by using the first core network node in the HPLMN and the core network node in the VPLMN, the message verification value, the terminal-supported security algorithm, and the selected end-to-end security algorithm to the terminal corresponding to the terminal identifier.

18. The method according to claim 16, wherein the end-to-end security algorithm comprises an integrity protection algorithm, and the end-to-end security key comprises an integrity protection key; and
the selecting, by the second core network node in the HPLMN, an end-to-end security algorithm, and sending the selected end-to-end security algorithm to the terminal corresponding to the terminal identifier comprises:
obtaining, by the second core network node in the HPLMN, an algorithm agreement request sent by the core network node in the VPLMN, wherein the algorithm agreement request comprises a terminal-supported security algorithm;
determining, by the second core network node in the HPLMN, the terminal-supported security algorithm based on the algorithm agreement request, and selecting the end-to-end security algorithm from the terminal-supported security algorithm;
performing, by the second core network node in the HPLMN, integrity protection on the terminal-supported security algorithm and the selected end-to-end security algorithm based on the integrity protection algorithm and the integrity key, to generate a message verification value;
returning, by the second core network node in the HPLMN, an algorithm agreement response message to the core network node in the VPLMN, wherein the algorithm agreement response message comprises the message verification value, the terminal-supported security algorithm, and the end-to-end security algorithm that is selected by the second core network node in the HPLMN; and
sending, by using the core network node in the VPLMN, the message verification value, the terminal-supported security algorithm, and the end-to-end security algorithm that is selected by the second core network node in the HPLMN to the terminal corresponding to the terminal identifier.

19. A core network node in a visited public land mobile network VPLMN, comprising:
a sending unit, configured to send a first data authentication request to a first core network node in a home public land mobile network HPLMN, wherein the first data authentication request comprises a terminal identifier of a terminal that has roamed to the VPLMN;
a receiving unit, configured to receive a first data authentication response sent by the first core network node in the HPLMN based on the terminal identifier comprised in the first data authentication request, wherein the first data authentication response comprises an authorization vector; and
a processing unit, configured to perform, based on the authorization vector received by the receiving unit, security authentication on and key agreement with the terminal corresponding to the terminal identifier, wherein
the key agreement enables the terminal to obtain an end-to-end security key used for secure communication between the terminal and a second core network node in the HPLMN.

20. The core network node according to claim 19, wherein the processing unit is further configured to:
before the sending unit sends the first data authentication request to the first core network node in the HPLMN, determine that communication data of the terminal in the VPLMN needs to be routed to a core network node in the HPLMN.

21. The core network node according to claim 20, wherein the processing unit is specifically configured to determine, in the following manner, that the communication data of the terminal in the VPLMN needs to be routed to the core network node in the HPLMN:
determining, based on the terminal identifier sent by the terminal, that the communication data of the terminal in the VPLMN needs to be routed to the core network node in the HPLMN, wherein the terminal identifier can indicate that the communication data of the terminal needs to be routed to the core network node in the HPLMN; or
determining, based on indication information sent by the terminal, that the communication data of the terminal in the VPLMN needs to be routed to the core network node in the HPLMN, wherein the indication information is used to indicate that the communication data of the terminal needs to be routed to the core network node in the HPLMN.

22. The core network node according to any one of claims 19 to 21, wherein the core network node is a serving general packet radio service GPRS support node SGSN in the VPLMN, the first core network node in the HPLMN is an SGSN in the HPLMN, and the second core network node in the HPLMN is a gateway general packet radio service GPRS support node in the HPLMN.

23. The core network node according to any one of claims 19 to 21, wherein the core network node is a mobility management entity MME in the VPLMN, the first core network node in the HPLMN is an MME in the HPLMN, and the second core network node in the HPLMN is a packet data network gateway in the HPLMN.

24. The core network node according to any one of claims 19 to 23, wherein the first data authentication request further comprises a terminal-supported security algorithm;
the first data authentication response further comprises a message verification value, the terminal-supported security algorithm, and an end-to-end security algorithm that is selected by the second core network node in the HPLMN;
the message verification value is generated by the second core network node in the HPLMN by performing integrity protection on the terminal-supported security algorithm and the end-to-end security algorithm based on an integrity protection algorithm and an integrity key; and
the sending unit is further configured to: after the receiving unit receives the first data authentication response sent by the first core network node in the HPLMN, send the message verification value, the terminal-supported security algorithm, and the end-to-end security algorithm that is selected by the second core network node in the HPLMN to the terminal corresponding to the terminal identifier.

25. The core network node according to claim 23, wherein the sending unit is further configured to:
after the processing unit performs security authentication on the terminal corresponding to the terminal identifier, send an algorithm agreement request to the second core network node in the HPLMN, wherein the algorithm agreement request comprises a terminal-supported security algorithm;
the receiving unit is further configured to receive an algorithm agreement response message returned by the second core network node in the HPLMN, wherein
the algorithm agreement response message comprises a message verification value, the terminal-supported security algorithm, and an end-to-end security algorithm that is selected by the second core network node in the HPLMN; and
the message verification value is generated by the second core network node in the HPLMN by performing integrity protection on the terminal-supported security algorithm and the end-to-end security algorithm based on an integrity protection algorithm and an integrity key; and
the sending unit is further configured to send the message verification value, the terminal-supported security algorithm, and the end-to-end security algorithm that is selected by the second core network node in the HPLMN to the terminal corresponding to the terminal identifier.

26. The core network node according to any one of claims 19 to 25, wherein the first data authentication request further comprises an address of the second core network node in the HPLMN, and the second core network node in the HPLMN is a core network node that is in the HPLMN and that is selected by the core network node in the VPLMN for the terminal for secure communication.

27. A first core network node in a home public land mobile network HPLMN, wherein the HPLMN comprises a second core network node different from the core network node, and the first core network node comprises:
a receiving unit, configured to: receive a first data authentication request sent by a core network node in a visited public land mobile network VPLMN, and receive a second data authentication response sent by the HLR or the HSS, wherein the second data authentication response comprises an authorization vector and an end-to-end security key, the end-to-end security key is used to protect secure communication between the terminal and the second core network node in the HPLMN, and the first data authentication request comprises a terminal identifier of the terminal that has roamed to the VPLMN; and
a sending unit, configured to: send a second data authentication request to the home location register HLR or the home subscriber server HSS based on the first data authentication request received by the receiving unit, send an end-to-end key notification to the second core network node in the HPLMN, and return a first data authentication response to the core network node in the VPLMN, wherein
the second data authentication request comprises the terminal identifier of the terminal that has roamed to the VPLMN, the end-to-end key notification comprises the terminal identifier and the end-to-end security key, the first data authentication response comprises the authorization vector, and the authorization vector is used by the core network node in the VPLMN to perform, based on the authorization vector, security authentication on and key agreement with the terminal corresponding to the terminal identifier.

28. The first core network node according to claim 27, wherein the first core network node is a serving general packet radio service GPRS support node SGSN in the HPLMN, the core network node in the VPLMN is an SGSN in the VPLMN, and the second core network node in the HPLMN is a gateway general packet radio service GPRS support node in the HPLMN.

29. The first core network node according to claim 27, wherein the first core network node is a mobility management entity MME in the HPLMN, the core network node in the VPLMN is an MME in the VPLMN, and the second core network node in the HPLMN is a packet data network gateway in the HPLMN.

30. The first core network node according to any one of claims 27 to 29, wherein the first data authentication request and the end-to-end key notification further comprise a terminal-supported security algorithm; and
the receiving unit is further configured to receive an end-to-end key notification reply message that is fed back by the second core network node in the HPLMN for the end-to-end key notification, wherein
the end-to-end key notification reply message comprises a message verification value, the terminal-supported security algorithm, and an end-to-end security algorithm that is selected by the second core network node in the HPLMN;
the first data authentication response further comprises the message verification value, the terminal-supported security algorithm, and the end-to-end security algorithm that is selected by the second core network node in the HPLMN; and
the message verification value is generated by the second core network node in the HPLMN by performing integrity protection on the terminal-supported security algorithm and the selected end-to-end security algorithm based on an integrity protection algorithm and an integrity key.

31. The first core network node according to any one of claims 27 to 30, wherein the first data authentication request further comprises an address of the second core network node in the HPLMN, and the second core network node in the HPLMN is a core network node that is in the HPLMN and that is selected by the core network node in the VPLMN for the terminal for secure communication; and
the sending unit specifically sends the end-to-end key notification to the second core network node in the HPLMN in the following manner:
sending the end-to-end key notification to the second core network node that is in the HPLMN and that is indicated by the address.

32. A second core network node in a home public land mobile network HPLMN, wherein the HPLMN comprises a first core network node different from the core network node, and the second core network node comprises:
a receiving unit, configured to receive an end-to-end key notification sent by the first core network node in the HPLMN, wherein
the end-to-end key notification comprises a terminal identifier and an end-to-end security key, the terminal identifier is used to identify a terminal that needs to route communication data to a core network node in the HPLMN, and the end-to-end security key is generated by a home location register HLR or a home subscriber server HSS of the terminal based on a second data authentication request routed by a core network node in the VPLMN to the HPLMN network, and is used to protect secure communication between the terminal and the second core network node in the HPLMN;
a processing unit, configured to: select an end-to-end security algorithm based on the terminal identifier and the end-to-end security key that are comprised in the end-to-end key notification, and perform, based on the end-to-end security key and the end-to-end security algorithm, secure communication with the terminal corresponding to the terminal identifier; and
a sending unit, configured to send the end-to-end security algorithm selected by the processing unit to the terminal corresponding to the terminal identifier.

33. The second core network node according to claim 32, wherein the second core network node is a gateway general packet radio service GPRS support node in the HPLMN, the core network node in the VPLMN is a serving general packet radio service GPRS support node SGSN in the VPLMN, and the first core network node in the HPLMN is an SGSN in the HPLMN.

34. The second core network node according to claim 32, wherein the second core network node is a gateway general packet radio service GPRS support node in the HPLMN, the core network node in the VPLMN is a mobility management entity MME in the VPLMN, and the first core network node in the HPLMN is an MME in the HPLMN.

35. The second core network node according to any one of claims 32 to 34, wherein the first data authentication request and the end-to-end key notification further comprise a terminal-supported security algorithm;
the end-to-end security algorithm comprises an integrity protection algorithm, and the end-to-end security key comprises an integrity protection key;
the processing unit selects the end-to-end security algorithm in the following manner:
obtaining, by the second core network node in the HPLMN, the end-to-end key notification sent by the first core network node in the HPLMN, and determining the terminal-supported security algorithm based on the end-to-end key notification; and
selecting, by the second core network node in the HPLMN, the end-to-end security algorithm from the terminal-supported security algorithm;
the processing unit is further configured to perform integrity protection on the terminal-supported security algorithm and the selected end-to-end security algorithm based on the integrity protection algorithm and the integrity key, to generate a message verification value; and
the sending unit specifically sends, in the following manner, the selected end-to-end security algorithm to the terminal corresponding to the terminal identifier:
sending an end-to-end key notification reply message to the first core network node in the HPLMN, wherein the end-to-end key notification reply message comprises the message verification value, the terminal-supported security algorithm, and the end-to-end security algorithm that is selected by the second core network node in the HPLMN; and
sending, by using the first core network node in the HPLMN and the core network node in the VPLMN, the message verification value, the terminal-supported security algorithm, and the selected end-to-end security algorithm to the terminal corresponding to the terminal identifier.

36. The second core network node according to claim 34, wherein the end-to-end security algorithm comprises an integrity protection algorithm, and the end-to-end security key comprises an integrity protection key;
the receiving unit is further configured to obtain an algorithm agreement request sent by the core network node in the VPLMN, wherein the algorithm agreement request comprises a terminal-supported security algorithm;
the processing unit specifically selects the end-to-end security algorithm in the following manner:
determining the terminal-supported security algorithm based on the algorithm agreement request, and selecting the end-to-end security algorithm from the terminal-supported security algorithm;
the processing unit is further configured to:
perform integrity protection on the terminal-supported security algorithm and the selected end-to-end security algorithm based on the integrity protection algorithm and the integrity key, to generate a message verification value; and
the sending unit is specifically configured to send, in the following manner, the selected end-to-end security algorithm to the terminal corresponding to the terminal identifier:
returning an algorithm agreement response message to the core network node in the VPLMN, wherein the algorithm agreement response message comprises the message verification value, the terminal-supported security algorithm, and the end-to-end security algorithm that is selected by the second core network node in the HPLMN; and
sending, by using the core network node in the VPLMN, the message verification value, the terminal-supported security algorithm, and the end-to-end security algorithm that is selected by the second core network node in the HPLMN to the terminal corresponding to the terminal identifier.
